# EUROPÄISCHE PATENTSCHRIFT

(11) **EP 1 159 115 B1**
(45) Veröffentlichungstag und Bekanntmachung des Hinweises auf die Patenterteilung: **15.11.2006**
(21) Anmeldenummer: 01901005.7
(22) Anmeldetag: 04.01.2001
(51) Int. Cl.: B29C 31/00

(54) **VERFAHREN ZUM EINBRINGEN VON ZUSCHLAGSTOFFEN (ADDITIVEN)**
METHOD FOR INTRODUCING ADDITIVES
PROCEDE POUR INTRODUIRE DES ADDITIFS

(30) Priorität: 10.01.2000 AT 192000; 07.06.2000 AT 9952000; 28.08.2000 AT 14752000; 15.11.2000 AT 19292000
(43) Veröffentlichungstag der Anmeldung: 05.12.2001
(60) Teilanmeldung: 06018820.8
(73) Patentinhaber: Sulzer Chemtech AG, 8404 Winterthur (CH)
(72) Erfinder: Ickinger, Georg, Dr. Techn., 8010 Graz (AT)
(74) Vertreter: Sulzer Management AG
(86) Internationale Anmeldenummer: PCT/AT2001/000003
(87) Internationale Veröffentlichungsnummer: WO 2001/051267

(56) Entgegenhaltungen:
- EP-A- 0 137 250
- DE-A- 2 144 069
- DE-A- 3 838 139
- FR-A- 2 096 236
- FR-A- 2 613 639
- US-A- 3 717 306
- US-A- 4 182 601
- US-A- 4 302 409
- US-A- 4 563 782
- US-A- 4 770 198
- US-A- 4 781 554
- US-A- 5 066 137
- US-A- 5 913 324
- PATENT ABSTRACTS OF JAPAN vol. 014, no. 447 (M-1029), 25. September 1990 (1990-09-25) & JP 02 178012 A (NISSEI PLASTICS IND CO), 11. Juli 1990 (1990-07-11)
- PATENT ABSTRACTS OF JAPAN vol. 1998, no. 05, 30. April 1998 (1998-04-30) & JP 10 006363 A (SUNSTAR INC), 13. Januar 1998 (1998-01-13)

## Beschreibung

Die Erfindung betrifft ein Verfahren sowie eine entsprechende Vorrichtung zum Einbringen eines Zuschlagstoffs in ein strömendes Medium unter Verwendung eines Injektors.

In der US-A-4 770 198 ist ein Verfahren (sowie eine entsprechende Vorrichtung) offenbart, gemäss dem eine erste Flüssigkeit unter einem Überdruck einer zweiten Flüssigkeit intermittierend und mit vorgegebenen Mengen zugemischt wird. Steuermittel für eine intermittierende Einspeisung umfassen nur Komponenten, die ausserhalb einer Einspeisedüse angeordnet sind.

Ein Verfahren sowie eine entsprechende Vorrichtung zur Regelung der Konzentration einer dispersen Phase in einer Emulsion oder Suspension, wobei die beizumischende disperse Phase mittels einer Injektionsleitung über eine pulsierende Strömmung zugeführt wird, ist aus der DE-A-3838139 bekannt.

In der US-A-4 182 601 ist eine Vorrichtung beschrieben, mit der ein Zuschlagstoff kontinuierlich in eine strömende Kunststoffschmelze eingespritzt wird.

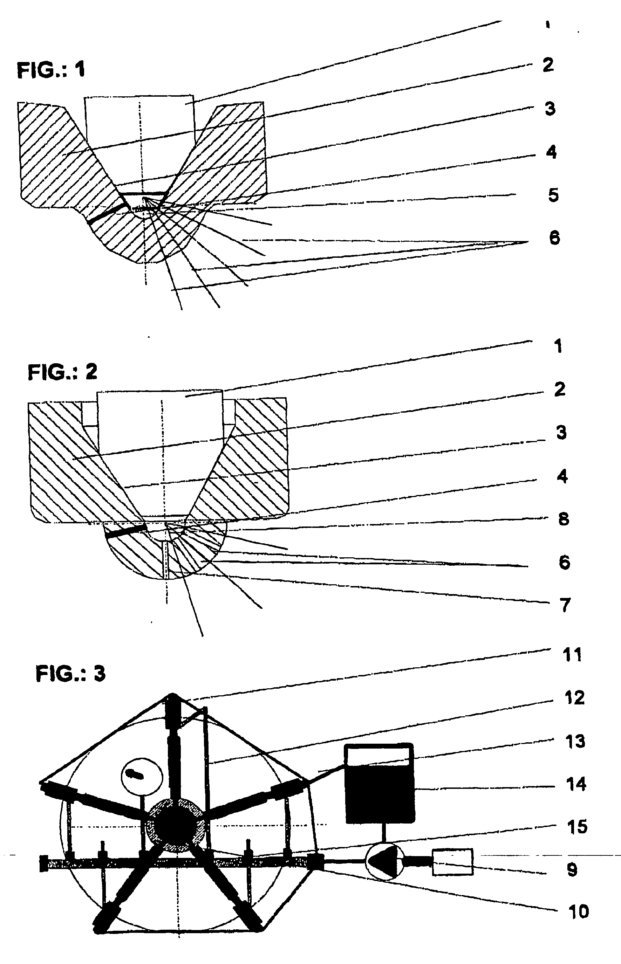

Die EP-A-0 137 250 offenbart eine Mehrstoffdüse, in der Ströme von zwei oder mehr fliessfähigen Komponenten innerhalb der Düse zu einem reaktiven Gemisch zusammengeführt werden. Ein Zuschlagstoff (Treibmittel) wird in einem Ausführungsbeispiel (Fig. 1 und 2) durch einen Seitenkanal kontinuierlich in eine der fliessfähigen Komponenten eingespeist.

Aufgabe der Erfindung ist es, ein Verfahren sowie eine entsprechende Vorrichtung zum Einbringen eines Zuschlagstoffs in ein strömendes Medium zu schaffen, wobei eine Vermischung durch das Eindringen eines Einspritzstrahls in das strömende Medium erfolgt. Diese Aufgabe wird durch das im Anspruch 1 definierte Verfahren bzw. die im Anspruch 9 definierte Vorrichtung gelöst.

Die abhängigen Ansprüche 2 bis 8 betreffen vorteilhafte Ausführungsformen des erfindungsgemässen Verfahrens. Gegenstand der Ansprüche 10 bis 25 ist die erfindungsgemässe Vorrichtung, mit der das Verfahren durchführbar ist.

Nachfolgend wird die Erfindung anhand weiterer Hinweise auf den Stand der Technik und anhand in Zeichnungen dargestellten Ausführungsformen erläutert. Dabei ist diese Beschreibung eine Zusammenstellung der Texte von vier Prioritätsanmeldungen.

### Wesentliche Erfindungsgedanke:

Der wesentlicher neue Gedanke dieses vorliegenden Verfahren besteht darin, daß bei höchst möglicher kinetische Energie die Zuschlagstoffe bei genau getaktetem Pulsieren und exakter Spritzdauer der Injektoren gute Zerstäubung, Durchmischung und tiefes, statistisch gut verteiltes Eindringen der Zuschlagstoffe in den Medienstrom möglich gemacht wird.
Die genaue Dosierung der Zuschlagstoffe erfolgt mittels Regelung der Betriebsgrößen bei der Einbringung wie zum Beispiel, Druck, Frequenz, Pulsdauer usw..
Bei den Verbrennungskraftmaschinen ist die "Common Rail" Einspritzung Stand der Technik. Die Flexibilität bei Veränderung der Betriebsparameter ist der Hauptnutzen dieser Technik gegenüber mechanischen Einspritzverfahren wie Pumpedüse usw. Durch hohe Drücke bis ca. 200 MPa wird Brennstoff mittels "Druckschiene" bis an die Düse gebracht und dort durch elektronische Steuerung der selenoid- oder pieziogesteuerten elektrohydraulischen Servoventile die Düsennadel präzise betätigt. Auf diese Weise wird die genaue Dosierung und homogene Verteilung erzielt.
Die Anwendung und Ausweitung dieser Einspritztechnik ist Gegenstand zur Nutzung dieser verbesserten Technologie auch für weiterer Anwendungen, die im Wesentlichen schon eingangs erwähnt wurden.
Ausführlich wird auf die Gestaltung der Düsen und Düsennadel, die Anordnung der Austrittsbohrungen in Lage und Form und die Anordnung der Injektoren eingegangen

### Stand der Technik über das Verfahren zum Einbringen von Zuschlagstoffen.

Folgende Vorrichtungen und Verfahren sind Gegenstand zur Lösung der obigen Aufgaben:

EP161614 WOLTON FRANK 1985 hat eine Vorrichtung zum Einspritzen von dosierten Mengen in einen Flüssigkeitsstrom entwickelt. Die Beimengung der Zuschlagstoffe wird mittels einer Chargierpumpe gesteuert, die vom vorbeiströmenden Medium betätigt wird.
Eine energetische Durchmischung liegt bei dieser Vorrichtung nicht vor, da nur geringe Druckunterschiede möglich sind.

Die Vorrichtung zum Einbringen von Additiven in den Flüssigkeitsstrom von hoher Viskosität wird in US 5913324 SIGNER ARNO 1997 vorgestellt.
Mittels Blenden werden die hohen Scherkräfte des hochviskosen Mediums genutzt um eine Durchmischung durchzuführen.
Eine Dosierung ist nur im Nebenstrang und unabhängig von der Hauptflußmenge möglich.

Die Vorrichtung zum Einbringen von Additiven in Flüssigkeitsstrom wird in EP0432336 CLOUP PHILLIP 1991 vorgestellt.

Für die Einbringung von Zusatzstoffen nach der Plastifiziereinrichtung sind folgende Verfahren bekannt

### WO89053226 HETTINGA SIEBOLT 1988

Lufteinblasung

### US4931236 HETTINGA SIEBOLT 1989

Geschäumter Schlauch mittels Eindüsung von Luft/Gas nach der Plastifiziereinrichtung.

### DE1948454 BAYER 1971

Einspritzen von chemischen Schaumbildner nach der Plastifiziereinheit.

Eine Durchmischung mittels energetischem Einspritzstrahl und pulsierende Dosierung ist in diesen letztgenannten Anmeldung nicht beabsichtigt,

Ein pulsierende Düse für das Aufbringen von Klebstoffen wird in US 5934521 KOIKE KATSUHIKO 1998 vorgestellt. Die Düsennadel wird mittels pneumatischen Zylinder auf und ab bewegt, sodaß Klebstoff in pulsförmigen Mengen austritt, Ein Durchmischung mit einem fließenden Medium ist nicht vorgesehen.
Pulsierende Einbringung von Flüssigkeiten in Gas sind Stand der Technik bei Brennern, Airless Spritzgeräten und Sprühgeräten (Atomizem).
Die vorliegende Erfindung grenzt sich von diesen Anwendungen dadurch ab, daß die Flüssigkeit mittels Hochdruck größer als 40MPa hochenergetische Zerstäubung,
möglich macht und diese Drücke mit den bisher verwendeten Düsen nicht verarbeitet werden können. Erst die elektrisch betätigten hydraulischen Servo-unterstützen common rail injectoren sind für diese Pulsierung geeignet.

### Beschreibung und wirtschaftlicher Nutzen des Verfahrens:

### Einbringung in den Kunststoff Schmelzestrom:

Die Einbringung erfolgt erst nach der Plastifiziereinheit.
Dies hat für folgende Produktionsverfahren Vorteile.

### Mehrere unterschiedliche Werkstoffe aus nur einer Plastifiziereinrichtung

Bei Spritzgießmaschinen wird bei variabler Einbringung vorbestimmte Eigenschaften, wie Porosität, Farbgebung nun Verfahrensschritte möglich, die sonst nur mit Mehrfarbenmaschinen durchgeführt werden.

Bei Extrusionsmaschinen werden mittels nur einer Plastifiziereinheit Profile extrudiert, wobei vorbestimmte Querschnitte ausgeschäumt werden, indem nach Teilung des Materialstromes vorbestimmte Bereiche mit Gasbildnem aus einem Injektor beaufschlagt werden und diese nach Expansion in die extrudierten Profilquerschnitte eingeleitet werden.

Kunststoffe für Platten und Rohrextruder werden erst nach der Plastifiziereinheit mit Farbstoff, Gasbildner, Weichmacher beaufschlagt, wobei ein rascher Wechsel der Materialeigenschaften zu wirtschaftlicher Flexibiltät führt.

Pelletiermachinen in der Nahrungsmittelindustrie werden nach dem Extruder mit Injektoren bestückt, sodaß Geschmacksstoffe Zusatzstoffe ohne Durchlaufen der Schnecken im Ganzen eingebracht werden.

Chemischer oder verfahrenstechnischer Anlagen wie beispielsweise Destillations-, Wasseraufbereitungsanlagen, und Raffinerien.
Die Einbringen, Dosieren und homogene Verteilung von Bleichmitteln, Lösungsmittel in den Kreislauf von Anlagen für Zell-, Zellulose- und Homogenstoffe erfolgt im derzeitigen Stand der Technik die Produktionmethoden das Einbringen der Zuschlagstoffe in eigenen Dosieranlagen mit nachfolgendem Mischer vor.
Dies hat wegen der hohen Scherkräfte eine gute Durchmischung zur Folge, hat jedoch den Nachteil, daß Veränderungen der Zuschlagsmenge oder Wechsel der Farben bzw. der chemischen Zusätze erst nach Durchlauf mehrer Chargen homogen möglich wird.

### Verfahren zum Einbringen von Zuschlagstoffen

### genaue Dosierung und homogene Verteilung

### Beschreibung

Die vorliegende Einrichtung hat sich zur Aufgabe gestellt in den Schmelzestrom von Kunststoffen und niedrig schmelzenden Metallen gasbildende Substanz einzubringen.

Der Vorteil dieser Einrichtung liegt darin, daß die Strukturen des Werkstückes dort im Leichtbau ausgeführt werden, wo diese erforderlich sind. Die gasbildende Substanz zur Expansion des Matrix-Materials wird an örtlich vorgesehenen Stellen eingebracht. Vielfältige Betriebsarten und deren Kombinationen sind erstens durch die Druckdifferenz zwischen Schmelze und gasbildender Substanz, zweitens durch die Frequenz der Pulsierung und drittens durch die Form von Düse und Schmelzkanal einstellbar:

### Schaumbildung:

bei hochfrequenter Pulsierung und somit Zerstäubung mit hoher Druckdifferenz und vorteilhaft im Gegenstrom und starker Beschleunigung der Schmelze durch Querschnittsveränderung. Die Geschwindigkeltsdifferenz der Medien wird hoch gewählt.

### Makro- Hohlzellen:

Tröpfechenformige Dotierung der Schmelze durch niederfrequente Pulsierung und bei geringer Druckdifferenz im Gleichstrom und gleichförmiger Strömung von gasbildender Substanz und der Schmelze.

### Strangeinbringung:

Stetige Einbringung eines fadenförmigen Stranges aus gasbildender Substanz In den nahezu mit gleicher Geschwindigkeit vorbeiströmenden Schmelze. Geringe Druckdifferenz ist vorteilhaft.

Eine Vorrichtung zum Spritzgießen von Kunststoffverbundtellen mit Injektionsdüse, die an eine Pumpe angeschlossen ist, die mit einem Treibmitteltank verbunden Ist, wurde in der Offenlegungsschrift DE1948454 von BAYER 1971 örtlich vorbestimmte Schäumung vorgeschlagen.
Wegen der unzureichenden Durchmischung hat diese Einrichtung nicht die gewünschte Schaumbildung erzeugt.

Die vorliegende Einrichtung grenzt sich durch Verwendung von Injektoren (zusammengesetzte Düse und Ventil) und pulsierende Injektion und wahlweise durch Verwendung einer gemeinsamen druckführenden Leitung "common rail technology" und hydro-elektrischer Betätigung der Ventile, durch hydrodynamisch geformte Düsen und Anströmkanäle im Düsenbereich und durch eine Drucksteuerung von dieser Offenlegung ab.
Die Betätigung des Selenoids erfolgt durch elektrische Versorgung, die wahlweise eine Generierung von frei gestaltbaren Wellenformen ermöglicht, "arbitrary wave form generator".
Dadurch kommt es zu Betriebsarten wie Zerstäubung, Dotierung und Strangeinbringung. Die Wahl der Druckdifferenz und der Frequenz der Pulsierung führen zu gewünschten Einbringung der gasbildenden Substanz in die Schmelze.
Die genaue Dosierbarkeit und Drucksteuerung führt zu gezielter Dotierung von Tropfen in der Schmelze, die anschließend zu Makro-Hohlzellen expandieren,

Die Vorrichtung zur Einbringung der gasbildenden Substanz in die unter hohen Druck stehende Schmelze besteht aus einer injektionsdüse in unmittelbarer Verbindung mit dem Steuerventil (Injektor), oder aus einem angeschlorisenen pulsierenden Pumpenelement mit Verschlußventil an der Spitze (Pumpe-Düse).

Insbesondere ist die Einspritztechnik bei Dieselmotoren bereits Stand der Technik, durch strenge Abgasvorschriften hoch entwickelt und von genauer Wiederholbarkeit,

Stand der Technik ist ein "fuel-injection valves for internal combustion engines" DE2028442, 1970 von DAIMLER BENZ. Die hydraulische Betätigung des Ventils erfolgt durch Dreiwegventile.

Ein "Injection device" mit hydroelektrischer Betätigung wurd 1971 von PEUQUEOT in FR2145081 vorgestellt. Die Ventilbetätigung erfolgt durch ständigen Hydraulikdruck an der Spitze und geregelten Druckabfall an der Rückseite des Stößels.

In US3990422 aus 1973 von BENDIX CORP sind Steuerung und elektro-hydraulische Betätigung verfeinert. Die Steuerung der Ventile erfolgt durch Zweikreis Kontroll Hydraulik.

Die oben genannten Injektoren weisen jene Merkmale auf, die zur Erfüllung der vorliegenden Aufgabenstellung notwendig sind. Diese sind Druckanpassung, elektrohydraulische Betätigung des Stößel-Steuer-Ventils, Kugelventil an der Hochdruckseite, die zur hochfrequenten Pulsierung notwendig sind, und die Heranbringung des Hochdruckes bis zum Ventilsitz, der unmittelbar an der Düse liegt (common rail), um eine genaue Druck- und Geschwindigkeitsdifferenz zwischen gasbildender Substanz und Schmelze herzustellen.
Die vorliegende Erfindung hat sich zur Aufgabe gestellt, diese Hochdruck-Technologie zu verwenden und durch Adaptierungen diese für den Bedarfsfall der Einspritzung in eine Schmelze nutzbar zu machen.
Für Injektoren im Verbrennungsraum wird der hohe Druckunterschied zur Zerstäubung und Verteilung des Kraftstoffes genutzt, Für den Anwendungsfall für Schmelzen ist Druck von 100 bis 140 Mpa der Schmelze zu Überwinden. Drücke bis zu 200 MPa werden mittels Injektoren mit gemeinsamer, Hochdruck Zuleitung (common rail) erzielt. Die ständige Versorgung der Injektoren mit diesen Drücken bis zum Ventil und die Betätigung der Ventile bei diesen Drücken sind gelöst und Stand der Technik.
Wesentliche Voraussetzung für diese Injektoren ist die Schmierfähigkeit der Kraftstoffe.
Die gasbildenden Substanzen (Wasser, Alkohol, flüssige Gase) haben im allgemeinen jedoch kelnerlei Schmierwirkung.
Wesentlicher Erfindungsgedanke Ist die Verwendung von zwei Kreisläufen, wobei handelsübliche Injektoren durch Zusatzmaßnahmen verwendet werden.
Im Patent JP 8170569 von NIPPON SOKEN 1994 ist eine Ausführung eines Injektors für Dieselmotore mit einem ständig druckführenden Hochdruckbereich und einem Niederdruck Steuermedium angeführt.
Die vorliegende Vorrichtung erzielt mittels Trennung der hydro-elektrischen Betätigung der Ventile mit standardmäßigem Hydrauliköl und Einbringung der gasbildenden Substanzen mit etwas geringer eingestelltem Druck (also umgekehrt wie bei JP 8170569) als jener des Steuerung-Hydraulköles eine Sperrwirkung im Stößel der Nadel sodaß kein Einspritzmedium in die Steuerhydraulik eindringen kann.
Nur mehr der Nadelsitz und die Nadel des Ventils kommen mit dem nichtschmierenden Medium in Berührung. Die Ausführung dieser Teile aus Sintermetall ist möglich und diese sind als Verschleißteil leicht auswechselbar. Der hydro-elektrische Regelteil im Injektor ist davon, wegen des getrennten Kreislaufes, nicht betroffen.
Weitere Alternativen der Injektorausführung sind:
Pumpe Düse Ausführung mit einer Kombination von Hochdruckkolben und Kugelventilen.
Mittels Elektromagnetischem Schwinger wird der Pumpenkolben in Schwingung versetzt. Durch den einstellbaren Anschlag und die Positionierung der Einlaßdüse wird die Auch die Verwendung der bewährten Airless Zerstäuber kann für einfache Anwendungen eingesetzt werden. Vorteilhaft ist, daß durch die Pumpwirkung nur eine geringe Druckdifferenz zwischen injiziertem Material und der Schmelze entsteht. Somit ist diese Einrichtung besonders für Dotierungen der Schmelze geeignet.

Die Regelung und Steuerung der Einbringung weist folgende Merkmale auf:
Wahlweise wird der hydraulische Steuerkreislauf von der zu injizierenden gasbildenden Substanz getrennt ausgeführt. Der Druck p₁ der Injektionssubstanz und des hydraulischen Steuerkreislaufes p₂ werden mittels dynamischem Druckregelventil gesteuert.
Das Steuergerät regelt in Abhängigkeit vom Schmelzedruck p_{3,} den hydraulischen Steuerkreislauf und den Injektionsdruck. Der Injektor wird mittels Selenoid oder Piezoelement betätigt. Diese Regelung erfolgt mittels "Arbitrary Wave Form Generator".
Weiters werden Ausführung von Hydraulik, Düsen, Injektoren und Schmelzkanal beschrieben,

Die Hydraulik wird für:
Strangfertigung, also stetigem Betrieb wie zum Beispiel Extrusion, Strangguß und für Stückfertigung mittels Spritzgießen und Druckguß beschrieben.
Die Anlage für Strangfertigung findet bei Extrudern Anwendung. Stetige Förderung und mehrfache Düsenanordnung ist gefordert.
Die Anlage für Stückgut findet bei Spritzgießmaschinen und Druckgußanlagen Anwendung. Durch die geringe Einsatzzeit der Injektionsanlage, die nur beim Spritzen zur Anwendung kommt, wird eine vereinfachte Lösung mittels Druckzylinder und Doppelkolben vorgschlagen. Die Hydraulikanlage der bestehenden Maschine erzeugt ca. 26 MPa, die verwendet werden, um den Hochdruck mittels Druckumsetzem zu erreichen. Während der Plastifizierung werden die Druckumsetzer wieder mit gasbildender Substanz einerseits und Hydraulik Steuerungsöl anderseits geladen.
Für die Dotierung der Schmelze mit konkret vorbestimmter Größe und Lage der Tropfen ist es notwendig, um genaue Druckdifferenz während des Einspritzvorgang zu gewährleisten. Zu hohe Druckdifferenz führt zur Zerstörung der Schmelze. Die Druckverläufe sind in FIG.: 9 dargestellt. Der Spritzdruck schwillt über den Einspritzvorgang bis zum Nenndruck an.
Während dieses EInspritzens muß der Gasbildner mit gering höherem Druck in die Schmelze gebracht werden. Die Geschwindigkeit der Schmelze im Angußkanal muß mit der Austrittsgeschwindigkeit des Gasbildners übereinstimmen.
Hiezu bedarf es einer genauen Druckregelung mittels elektrischen Druckbegrenzem und einer präzisen Betätigung der hydro-elektrischen Ventile. Die hydro-dynamische Ausbildung von Ventilsitz, Ventileinsatz und die strakende Ausbildung des Düsenkanales sind Voraussetzung für eine einwandfreie Dotierung.
Die Injektoren der "common rail technology" sind in der Lage diese Anforderungen zu erfüllen.

Die Ansteuerung der Selenoide erfolgt mittels "Arbitrary Wave Form Generator", sodaß die Öffnung und Schließung optimiert werden kann.

Im Weiteren wird die Gestaltung von Düse und Schmelzkanal beschrieben.

### Verfahren zum Einbringen von Zuschlagstoffen

### genaue Dosierung und homogene Verteilung.

Das vorliegende Verfahren hat sich zur Aufgabe gestellt, in einem vom Schmelzestrom abgezweigten Schmelzekanal das Material durch Zuführen von Zuschlagstoffen, Dosieren, Vermischen und Verteilen eine Compoundierung, also Veränderung des Materiales, vorzunehmen.
Diese Zuschlagstoffe bestimmen wesentlich die Eigenschaften des Kunststoffes im Schmelzestrang.
Diese Zuschlagstoffe sind beispielsweise Zusatzkomponente wie Härter, Farbstoffe, Gasbildner, Weichmacher, EüHstoffe. Faserverstärkungen.
Dieses Verfahren kann ebenso im Inneren von Extrusionswerkzeugen und Formen von Spritzgießmaschinen angewendet werden, wobei mindestens zwei Stränge von unterschiedlichem Kunststoffmaterialen verarbeitet werden.

Mit diesem Verfahren hergestellte Profile weisen somit an vorbestimmten Querschnitten unterschiedliche Materialeigenschaften aus.
Dieses Verfahren spart somit einen Extruder zur Herstellung einer weiteren Materialkomponente.
Der wesentliche Vorteil liegt darin, daß ausgehend vom gleichen Grundmaterial eine spätere Entsorgung erleichtert wird, da von ein und demselben Grundmaterial ausgegangen wird und die Zuschlagstoffe sich beim anschließenden Recyklieren verteilen oder ausgeschieden werden.

Die Zuschlagstoffe werden mittels Injektor eingebracht.

Folgende konkrete Anwendungen für die Herstellung von Profilen seien hier beispielsweise aufgezeigt:

### PVC Fensterprofile.

Die Bereiche der Profile, die der Fenster Außen- bzw. Innenseite nahe liegen werden nach dem vorliegenden Verfahren wärme- und schalldämmend ausgeschäumt.
Die Dome, die das bisher bekannte Mehrfach-Kammem-System mit Hohlräumen ausstatten, werden mit vorliegend beschriebene Vorrichtung ausgestattet. Vom Schmelzesstrom wird innerhalb des Domes ein Schmelzekanal geführt, der mittels Mengensteuerung (Ventil, Drossel) die Schmelze an der Vorrichtung zur Zuführung der Zuschlagsstoffe vorbeiführt. Nachgeschaltet werden Einrichtung zur Vermischung und Homogenisierung im Kanal die Compoundierung durchführen. Im Falle des PVC Fensterprofiles ist dieser Zuschlagstoff physikalisches Schäummittel wie Wasser, Kohlendioxyd, Alkohol, Glyzerin usw.
Der Druckverlauf im Schmelzekanal ist abnehmend, sodaß die Zuschlagstoffe gasen und die Volumsvergrößerung entweder durch Geschwindigkeitssteigerung bzw, durch Volumenszuwachs in der Expansionszone (trichterförmige Aufweitung) das compoundierte Material zu den außenliegenden PVC Profilwänden heranführen und dort homogen miteinander adhesiv verbunden werden.
Der Vorteil dieser Profile mit Mehrfach-Komponenten liegt in der günstigen und einfachen Herstellung, in der Wärmedämmung (Niederdruck in den Schaumzellen und somit geringe Molekularbewegung und geringe Wärmeübertragung) und einfache Entsorgungskosten.
Als Variante werden die Zuschlagstoffe als einzelne Dotierung eingebracht und bilden im Profil honeycombartige Zellstrukturen von hoher Festigkeit. Diese Strukturen ersetzen etwaige notwenige Verstärkungsprofile.

**Fensterprofile aus Polyolefinen:** wie oben, jedoch aus Polypropylen PP oder Polyethylen PE, HDPE usw.

### Claddings oder bretterähnliche Außenverkleidung für Häuser oder lnnenwände.

Einfacher als oben beschrieben wird das gesamte extrudierte Profil zur Gänze mit Schaum oder großen Zellstrukturen versehen, wobei das Material vom Hauptstrom abgezweigt wird und compoundiert wird.
Der nachfolgende Prozess der Kalibrierung und Kühlung bleibt wie beim bisherigen Verfahren.
Dieselben Profile werden auch bei Innenausstattung und mobilen Zwischenwänden zum Einsatz kommen und zeichnen sich bei Herstellung von groben Zellstrukturen durch hohe Festigkeit aus.

### Rohre aus PVC, PO

Durch geeignete Einbringung der geschäumten oder mit Füllstoffen-, Faserverstärkung versehenen Schmelzestrom in die vorgesehene Bereiche des Profiles, wie zum Beispiel Zwischenschicht, Randschicht usw., wird ein mehrkomponentiges Rohr mit einfachen Maßnahmen herstellbar, Die Vorrichtung zum Compoundieren wird zwischen die Flansche von Extruder und Werkzeug eingebaut und versorgt die Kanäle des Werkzeuges mit dem veränderten Schmelzestrom.
Eine ander Herstellmöglichkeit und guten Vermischung von Schmelze und Zuschlagstoffen besteht in der Zuführung der Zuschlagstoffe vor der Zellenradpumpe. Die zusätzlich eingebauten Mischer und Mischköpfe sorgen für eine homogene Compoundierung.

### Farbgebung an den Randschichten der Profile.

Die Einbringung von Farbstoffen in den getrennten Schmelzekanal ermöglicht unterschiedliche rasch wechselbare Fargebung. Wirtschaftlich sind die hochwertigen Farbstoffe hochpreisig und somit muß bei Farbwechsel nicht mehr der Extruder ausgefahren werden.
Die Umstellung der Farbe wird unmittelbar und ohne Verluste wirksam.

Die Heranbringung einer gezielten Randschicht, die mit Farbstoffen versehen ist führt zu einer weiteren Möglichkeit der Kostenreduzierung.

### Herstellung von Platten, Isolierplatten und Verbundplatten

Bei Anlagen von großer Arbeitsbreite wird entweder die Zuschlagkomponente gleich in die Mitte der extrudierten Platte zugegeben, oder der Schmekzekanal abgezweigt und ähnlich wie bei der Vorrichtung, die den Einbau in einem Dom ermöglicht, beschrieben wurde, Jedoch für die erforderlichen großen Arbeitsbreiten gestaltet sind.

### Vorrichtung zur Nachrüstung von Extrusionsanlagen für Mehr-Komponenten-Betrieb:

Die Vorrichtung wird zwischen die Flansche von Extruder und Werkzeuganschluß montiert und enthält folgende Bauelemente.
Mindestens ein Einlauftrichter mit Teilung des Schmelzekanals.
Druck und Mengenregler des Schmelzestromes.
Vorrichtung zum Einbringen der Zuschlagstoffe bestehend aus Injektor.
Mischstation bestehend aus Mischzone beispielsweise Stifte, Blenden, Wendelzonen.
Expansionszonen mit veränderlichen Querschnitten insbesonders für Schaum-Komponenten bzw. Hohlzellen Schmelzestrom.

### Vorrichtung zum Dotieren und Mischen von Substanzen in flüssiges Medium mittels Sitz- oder Sacklochdüse, insbesondere in Helßkanaldüse.

Die Erfindung betrifft einen multifunktionalen Misch- und Dosierkopf bestehend aus einem Düsenkegel und einer Düsennadel die durch die Nadelstellung die Menge und Fließgeschwindigkeit des außen fließende Medium dosiert oder abriegelt, und diese Düsennadel wiederum als Düsenkegel mit einer Düsennadel ausgebildet ist, die die Menge und Fließgeschwindigkeit des innen fließende Mediums dosiert oder abriegelt.

Diese Kombination aus Ventil, Düse und injektion in diese Strömungsführung des äußeren Mediums ausgebildet als konzentrischer Doppelkegel ermöglicht eine energiesparendes Mischen.
Die Erfindung betrifft auch eine Heißkanaldüse, deren Verschlußnadel aus einem injektor zur Einbringung und Dotierung von Substanzen in die außen fließende Schmelze besteht.
Ebenso werden zahlreiche Kombinationen dieses Misch- und Dosierkopfes erwähnt, insbesonders der Einbau in Plastifiziereinheiten Extruder Schmelzekanal und dem Nachschlten eines statischen Mischers.

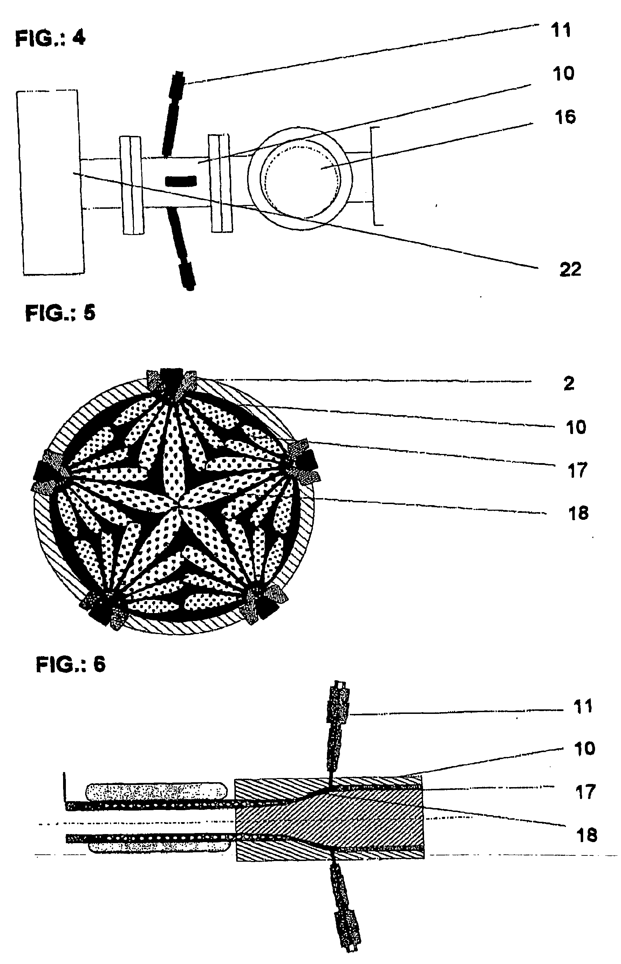

Der wirtschaftliche Nutzen besteht in der örtlich vorbestimmten genauem Dotierung der guten Durchmischung im Mischkopf und der genauen Dosierung des Mischverhältnisses.
Angewendet als Heißkanaldüse mit integrierten Mischkopf wird die Kunststoffschmelze mit Substanzen wie Farbstoffen, Härter, Weichmachern, Gasbildnern usw. direkt unmittelbar vor der Einspritzung in das Werkzeug versehen.
Neben den zahlreich bekannten 2 Komponenten Heißkanaldüsen zeichnet sich die vorgeschlagene Lösung durch folgende Merkmale aus:
Der Einsatz einer konzentrisch liegenden Verschlußnadel in der Verschlußdüse.
In EP 0310 914 aus 1987 Verfahren zum Spritzgießen (BATTENFELD) ist eine konzentrisch liegende Verschlußnadel in FIG. 6.1 bis 6.5 aufgezeigt worden.
Die vorliegende Vorrichtung grenzt sich davon dadurch ab, daß im Gegensatz zu EP 0310914 wo jeweils nur ein Medium geschaltet wird, eine vorbestimmte gezielte Dotierung, genaue Dosierung und/oder gute Durchmischung mittels Einspritzen in den Flüssigkeitsstrom und wahlweise Pulsation angestrebt wird.

In US 4657496 aus 1987 von HUSKY wird ein Heißkanaldüse für 2 Komponenten mit konzentrisch liegenden Zuführungsrohr veröffentlicht. Durch eine Ausnehmung (9) und (6) in der Düsennadel wird je nach Stellung entweder die eine oder die andere oder beide Komponente freigegeben. Die konzentrische Ausbildung der inneren Düse in der äußeren Düse ermöglicht die Dosierung durch die gesteuerte Spaltweite jeweils selbstständig sowohl der inneren, wie der äußeren Düse.
Eine Durchmischung bzw. ein rasch pulsierendes Einbringen, wie dies die vorliegende Vorrichtung zeigt, ist jedoch nicht Gegenstand dieser US4657496 Patentes.

Die vorliegende Erfindung zielt darauf ab, neben der konzentrischen Einbringung mindestens zweier Medien, diese auch zu Mischen bzw. das äußere Medium mit dem Inneren Medium zu dotieren bzw. zu impfen.

In US 5286184 ist eine Variante der konzentrischen Düsen dargestellt, die sich in der Betätigung der hohl ausgebildeten Düsennadel von US4657496 unterscheidet. Auch hier ist eine konzentrische Einbringung, jedoch keine Durchmischung bzw. Dotierung vorgesehen.
Die Verschlußnadel wird mittels in einer Bohrung liegenden Bolzen, der von einem Servomechanik gesteuert wird, betätigt.
Für eine vorbestimmte gezielte Dotierung und/oder genaue Dosierung und gute Durchmischung ist die Verwendung einer Sitzlochdüse (VCO valve cone orifice) und eines CDI Injektors, wie diese in der Verbrennungskraft Technik eingesetzt werden, vorteilhaft.
Für eine vorbestimmte gezielte Dotierung und/oder genaue Dosierung und gute Eindringtiefe ist die Verwendung einer Sacklochdüse und eines CDI Injektors, wie diese
in der Verbrennungskraft Technik eingesetzt werden, vorteilhaft.

Die Betätigung erfolgt neben der bekannten Hydraulikkolben auch mittels Servomechanik beispielsweise Solenoid, Piezo-gesteuerter Hydraulik Servos.

### Beschreibung der Abbildungen:

Verzeichnis der Bezugszeichen;
- 1.: Düsennadel pulsierend bewegt
- 2.: Düsenkörper
- 3.: Nadelsitz
- 4.: Flache Bohrung im Düsenkörper
- 6.: Freiraum in der Sitzlochdüse
- 6.: Fächerförmig angeordnete Bohrungen
- 7.: Achsiale Bohrung im Düsenkörper
- 8.: Freiraum der Sacklochdüse
- 9.: Hochdruckpumpe
- 10.: Rohr des fließenden Mediums
- 11.: Injektor
- 12.: Hochdruckleitung
- 13.: Leckölleitung
- 14.: Behälter des Additivs
- 15.: Common rail (Sammelleitung)
- 18.: Zahnradpumpe
- 17.: Fließendes Medium
- 18.: Einspritzstrahl
- 19.: Plastiflzierzylinder
- 20.: Plastifizierkammer bei Spritzgießmaschinen
- 21.: Düse des Plastifizierzylinders
- 22.: Werkzeug
- 23.: Heißkanalsystem
- 24.: Sperre
- 25.: Airless Pistole
- 28.: Verdichter
- 27.: Luftzuleitung
- 28.: Brennkammer
- 29.: Flammzone
- 30.: Dorn mit Expansionskanal
- 31.: Stege für Profile
- 32.: Dom für Hohlkammern
- 33.: Geschäumte Hohlkammer
- 34.: Hohlkammer
- 35.: Profil
- 38.: Kaskadenförmige Einspritzung
- 37.: Fächerförmige Einspritzung
- 38.: Kern des Werkzeuges
- 39.: Mitgerissene /zugemischte Luft
- 40.: Schnecke der Plastifizeireinheit
- 41.: Expansionszone im Nebenkanal vorzugsweise im Dorn des Werkzeuges angebracht.

- 51: Werkzeug zur Herstellung von extrudierten Profilen
- 52: Schmelzefluß, Anschluß zum Extruder
- 53: Dorn mit Schmelzekanal, Einbauteil im Werkzeug zur Leitung des Schmelzeflusses, im vorliegenden Falle mit integriertem Schmelzekanal.
- 54: Injektor, Düse zum Einspritzen von Zuschlagstoffen, Im abgezweigten Kanal
- 55: Eingespritzte Zuschlagstoffe
55a Einspritzen im Gleichstrom
55b Einspritzen Im Gegenstrom
- 56: Austrittsquerschnitt des abgezweigten Schmelzekanales
- 57: Dorn zur Herstellung eines Hohlraumes und zugehöriger Hohlraum im Profil
- 58: Schmelzekanal mit unverändertem Extrudat und korrespondierendem Profil
- 59: Hochdruckpumpe für Zuschlagstoffe
- 60: Expansionszone für gasbildende Zuschlagstoffe
- 61: Querschnittsveränderung regulierbar im Austritt, Schikane für Durchmischung
- 62: Querschnittsveränderung im Eintrittskanal, regulierbar
- 63: Drucksensor im abgezweigten Schmelzestrom zur Nutzung als Regelparameter
- 64: Dom mit Schmelzekanal und Eintrittsöffnung
- 65: Ringförmige Eintrittsöffnung für mehrschichtige Profile
- 66: Mittige Eintrittsöffnung für die inneren Profilschicht
- 67: Durchtrittskanal durch einen anderen Schmelzekanal
- 68: Flansch des Werkzeuges
- 69: Flansch des Extruders
- 70: Zwischenstück als Nachrüstung
- 71: Schmelzkanalverlängerung
- 72: Durchtritte zum Schmelzekanal

- 81.: Schmelze-Verschlußnadel außen
- 82.: Substanz-Verschlußnadel innen
- 83.: Doppelkegelsitz
- 84.: Bohrung und Bolzen zur Betätigung der Substanz-Verschlußnadel
- 85.: Zuführung der Substanz in der Bohrung
- 88.: Detail des Misch- und Dosierkopfes
- 87.: Sitzlochdüsen-, Secklochdüseneinsatz
- 88.: CDI Injektor
- 89.: Zuführungskanal der Schmelze
- 90.: Betätigungskolben hydraulisch
- 91.: Zuführung der Substanz
- 82.: Dotierung, Schmelze mit der Substanz
- 93.: Servomechanik beispielsweise Selenoid/hydraulik, Piezo/hydraulik
- 94.: Hotrunner Düsensitz
- 95.: Spritzgießen Düsensitz
- 96.: Spritzgießen Plastifizierdüse
- 97.: Extrusion Düsensitz
- 98.: Zuleitvorrichtung
- 99.: Extrusion Schmelzekanal
- 100.: Statischer Mischer
- 101: Fördereinrichtung gasb. Substanz
- 102: Druckregelventil gasb. Substanz p₁
- 103: Kreislauf gasbildender Substanz
- 104: Hydraulik Regelkreislauf
- 105: Fördereinrichtung Hydraulik Kreis
- 106: Druckregelung Hydraulik Kreis p₂
- 107: Tank Hydraulik
- 108: Ventilkugel
- 109: Selenoid oder Piezoeiheit
- 110: Hydraulische Betätigung des Ventils
- 111: Sperrdruck, Dichtung
- 112: Ventil des Injektors
- 113: Düse des injektors
- 114: Schmelzestrom
- 115: Drucksensor im Schmelzestrom
- 116: Zwischenstück Angußkanal
- 117: Einbringung gb. S, in die Schmelze
- 118: Heizung des Zwischenstückes
- 119: Druckmeßgeber für p₃ (Schmelze)
- 120: Arbitrary Wave Form Generator
- 121: Druckmeßelnrichtung
- 122: Steuereinrichtung
- 123: Verbindung SGM, Extruder, Strangp.
- 124: Pumpe-Düse Kombination
- 125: Leckölleitung Steuerhydraulik
- 126: Zuleitung Steuerungshydraulik
- 127: Zuganker für Magnetbetätigung
- 128: Injektor
- 129: Drosselventil
- 130: Ventilstössel
- 131: Feder für Schließkraft
- 132: Zuleitung für die gasb. Substanz
- 133: Zusätzlicher Kanal für 2. Medium
- 134: Endanschlag für Hubbegrenzung
- 135: Pumpenstößel
- 136: Ventilsitz Zuleitung
- 137: Kugelventil Zuleitung
- 138: Rückhohlfeder
- 139: Sperrventil gegenüber Schmelze
- 140: Lecköl Leitung
- 141: Einbördelung des Ventilkugeisitzes
- 142: Hydraulik der Grundmaschine
- 143: Doppelkolben für gasb. Substanz
- 144: Doppelkolben für Steuerhydraulik
- 145: Druck Achse in Mp
- 146: P1 Druck gasbildende Substanz
- 147: P2 Druck Steuerhydraulik
- 148: P3 Druck tier Schmelze
- 149: P5 Druck am Steuerkolben
- 150: Zeitachse
- 151: Spannung am Selenoid
- 152: Bezugsachse
- 153: Trapezförmige Wellenform
- 154: Dreieckige Wellenform
- 155: Halb Sinusschwingung
- 156: Glockenfömige Wellen Form
- 157: Periodisierte Wellenform
- 158: Unsymmetrische Glockenform
- 159: Injektor Heizung
- 160: Spritzdüse
- 161: Dotierung im Gleichstrom
- 162: Anschluß am Werkzeug
- 163: Zerstäubung im Gleich-, Gegenstrom
- 164: Vergrößerung der Strangeinbringung
- 165: Düsenkörper
- 168: Schlitzdüse
- 167: Sternlochdüse
- 168: Sacklochdüse
- 169: Vergrößerung der Lavaldüse
- 170: Düsenkegel geöffnet gezeichnet
- 171: Düsenkanal
- 172: Sitzlochdüse mit axialer Düse
- 173: Kegeldüse mit axialer Düse

### Beschreibung der Figuren:

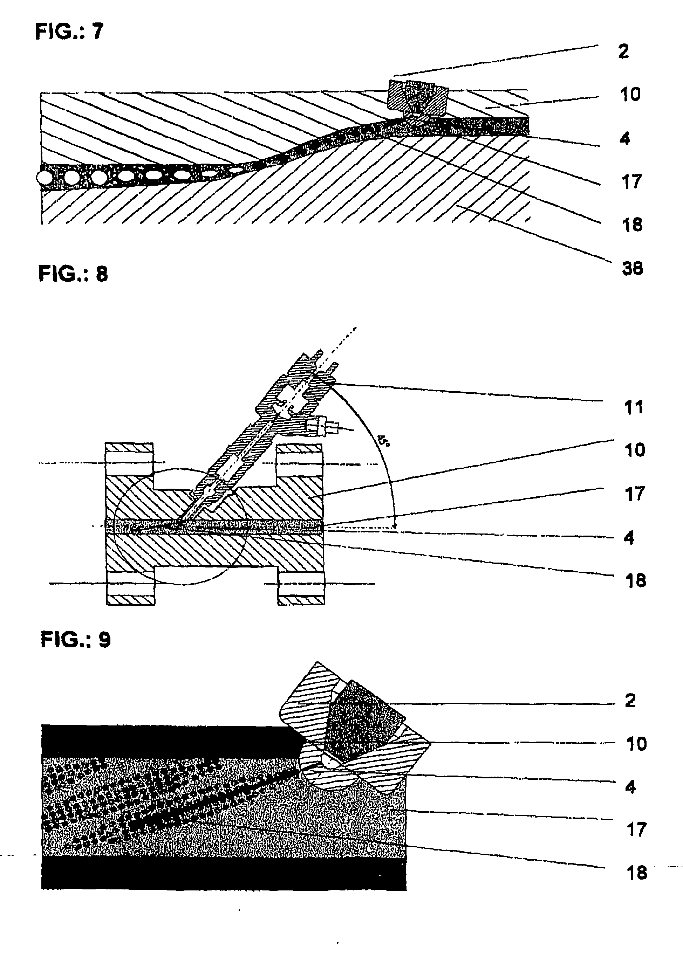

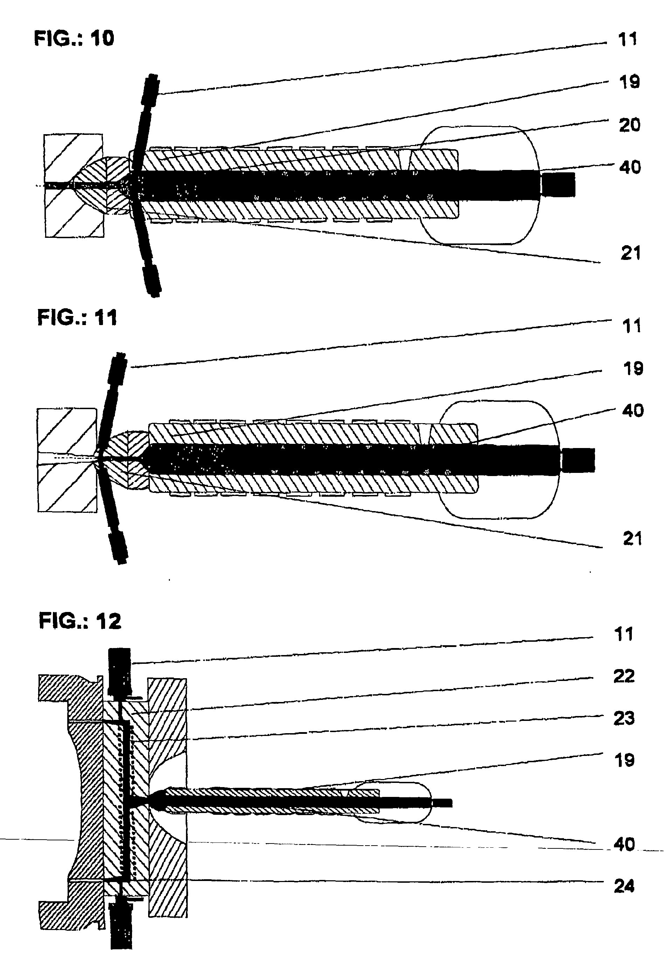

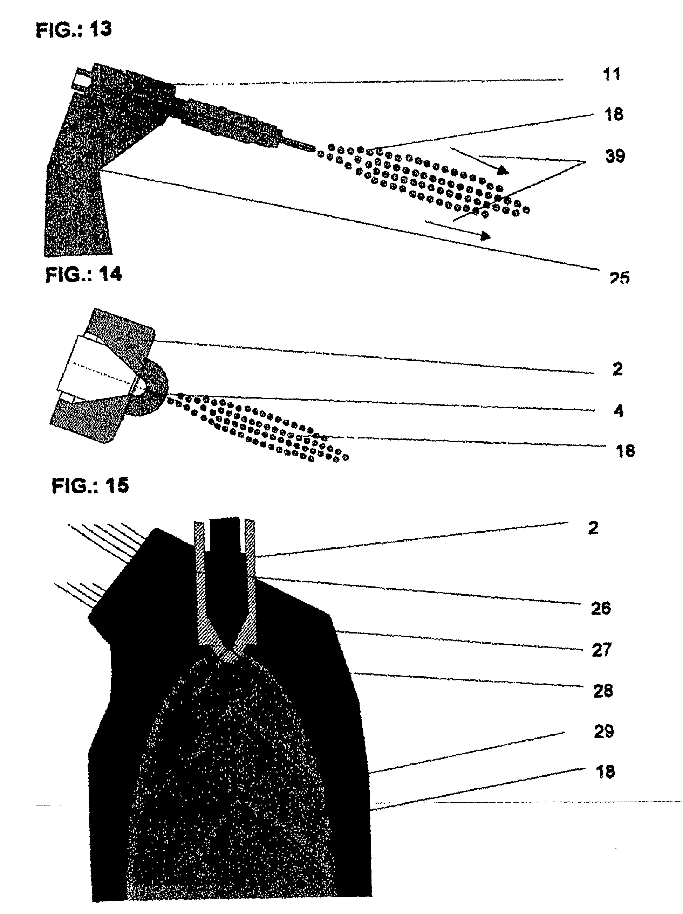

In Figur 1 und 2 sind Düsen mit Düsennadel und Nadelsitz dargestellt.
In den nachfolgenden Figuren 3 bis 17 sind Beispiele für die Anwendung des Verfahrens zur genauen Dosierung und möglichst homogenen Verteilungen dargestellt.

In Figur 1 ist eine Sitzlochdüse dargestellt. Mit (1) ist die Düsennadel, die den Nadelsitz (3) im Düsenkörper (2) abschließt. Der geringe Freiraum (5) mit geringem Volumen kennzeichnet die Sitzlochdüse, deren Bohrung (4) mit ca 80° aus der Achse im allgemeinen bei Verbrennungskraftmotoren Verwendung findet. Die Bohrungen (6) deren Achsen auf der rechten Seite dargestellt sind, ergeben die Bohrungen mit Neigungen von 0 bis 75° aus der Achse der Düse,

In Figur 2 ist eine Sacklochdüse dargestellt. Der große Freiraum (8) der Düse neigt zum Nachtropfen, bietet aber großen Spielraum zur Gestaltung der fächerförmigen Bohrungen (6) bis zur achslalen Bohrung (7).

In Figur 3 ist die Anordnung einer Dosier und Mischeinrichtung für fließendes Medium Im Rohr (10) gezeichnet. 5 injektoren (11) ragen in das Rohr. Die Injektoren sind an ein Hochdruckleitung (12) der Zusatzstoffe angeschlossen. Mit (14) der Tank, (9) die Hochdruckpumpe über (15) die Zuleitung (common rail) und (13) die Leckölleitung.

In Figur 4 ist die Anordnung der Figur 3 in der Draufsicht für eine Extrusionsanlage gezeigt. Die Dosier und Mischeinrichtung liegt in der Flußrichtung zwischen Zahnradpumpe (16) in der Zuleitung, die zugleich Mischrohr (10) der Vorrichtung ist, zum Werkzeug (22).

Figur 5 stellt den Rohrquerschnitt (10) in der Vergrößerung dar. Die 5 Düsenkörper (2) sind um 72° gedreht angeordnet. Jeder Düsenkörper hat 7 Bohrungen im Winkel 75°, 50°, 25° und 0° zur Achse. Die Einspritz-Strahlen (18) geben eine gleichmäßige Abdeckung des Querschnittes des Mediums (17). Die Lange des Spritzstrahles wird durch den Bohrungsdurchmesser bestimmt, der zwischen 0,11mm und 0,14mm liegt.

In der Figur 6 ist ein Extruder Werkzeug für ein zylindrisches Profil dargestellt. Zwei der vielfach angeordneten Injektoren (11) sind im Schnitt gezeichnet. Die Zusatzstoffe (18) werden entsprechend der Fließgeschwindigkleit des Mediums (17) in Fließrichtung eingestrahlt.

In Figur 7 ist das Detail der Düsenanordnung dargestellt. Die Düsenkörper (2) haben mindestens eine Bohrung (4) in der Kanal und Fließrichtung. Der Einspritzsrahl ist derart gerichtet, daß die Zusatzstoffe nicht an die Wand (10) und den Kem (38) gelangen.

In Figur 8 ist der Anwendungsfall für einen einzelnen Injektor dargestellt, der mit ca. 45° zur Rohrachse (10) geneigt ist. Die Einspritzbohrung (4) ist im flachen Winkel zum Medium Fluß geneigt, also ca. 40° aus der Injektorachse angeordnet.
Die pulsende Einspritzung ergibt die in Figur 9 dargestellte kaskadenförmige Verteilung.

Figur 10 stellt Anwendungsfälle bei Spritzgießmaschinen dar. Ähnlich wie in Figur 8 und 9, hier aber mit mindestens zwei Injektoren (11) dargestellt wird der Zusatzstoff in Fließrichtung leicht geneigt in Richtung der Düse (21) eingespritzt in Figur 10 ist dies nach der Schnecke (40) innerhalb des Plastifizierzylinders (19) also noch in den Plastifizierraum (20). Dies ist für weitere gute Durchmischung wie zum Beispiel zum Einmischen von Farbstoffen, vorteilhaft. Diese Anordnung ist auch zwischen zwei Schneckenabschnitten Innerhalb einer Plastifiziereinheit denkbar.
Für genaue Dostierung ohne Durchmischung ist die Anordnung in Figur 11.
Hier wird in der Austrittsöffnung der Düse (21) eingespritzt. Dies ist für Anwendungen wie Mischen mit Härtern und Weichmachern, geeignet.

In Figur 12 erfolgt die Einspritzung durch den Injektor (11) erst unmittelbar vor Eintritt ins Werkzeug (22). Vorteilhaft wird dies in einem Heißkanalsystem (23) angewendet. Die tatsächlich ins Werkzeug gelangende Mischung wird nicht vom Material im Plastifizierzylinder (19) bestimmt, sondern erst nach Einbringung der Zuschlagstoffe flexibel und variabel bestimmt.

Figur 13 stellt den Anwendungsfall einer Airless Spritzpistole (25) dar. Das fließende Medium (39) ist in diesem Falle die umströmende Luft. Der Zusatzstoff ist der Lack (18).
Die Pulsierung wird entsprechen der Lackierungsbedingungen eingestellt.
Die Düsenanordnung der Airless Anlage ist in Figur 14 dargestellt. Mindestens eine Bohrung (4) im Düsenkörper (2) nahe der Achsrichtung liegend ergibt das Bild des Einspritzstrahles (18).

In Figur 15 ist die Dosier und Mischvorrichtung an Hand einer Brenneranlage dargestellt. Die Düse (2) ragt in den Brennraum (27), dessen Mantel (28) die Mischkammer begrenzt. Die Verbrennungsluft wird mittels Verdichter (26) komprimiert und die Zuerstäubung erfolgt mittels der auf einem Kegel liegenden Einspritzbohrungen**.**
Der Einspritzstrahl (18) des Brennstoffes ergibt die genau dosiertes und gemischtes Verbrennungsgemisch (29)**.**

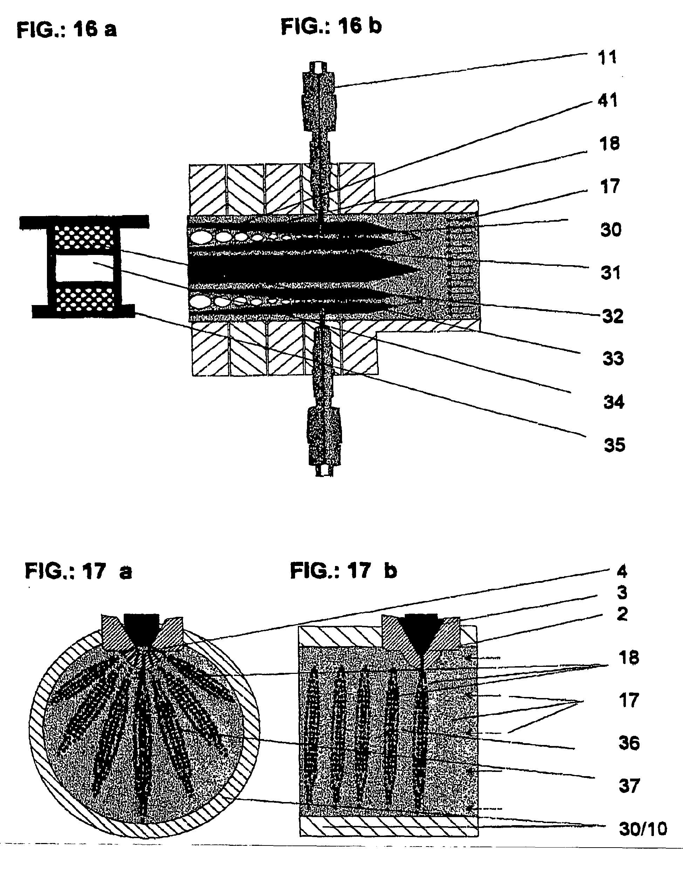

In Figur 16 a und b ist der Anwendungsfall eines Werkzeuges für einen Extruder zur Herstellung von Profilen, wie beispielsweise von Fensterprofilen gezeigt.
Die Dosier und Mischvorrichtung hat hier den Zweck Material aus dem Extrudierten Hauptstrang mit Gasbildnern zu dotieren. Der Querschnitt der Form ist in Figur 16b dargestellt. Die injektoren (11) ragen in den Nebenschmelzestrom (30). Die ptofilbildenclen Ströme (31) werden durch Einlaufkanäle der Dorne (32) getrennt, Der Schmelzestrom (17) wird dotiert (18) und bildet im Nebenstrang Schaum der in die Kammern (33) und (35) gelangt. Kammern mit vollem Dom werden wie bisher als Hohlräume (34) ausgebildet.

In Figur 17 a und b ist die Darstellung der pulsierenden Einspritzung (18) des Nebenkanals (30) gezeigt. Diese Darstellung ist auch für andere Anwendungen als für die Extrusion in Figur 16 wie zum Beispiel für Pelletieranlagen, Stranggußanlagen mit eigenem Mischrohr (10) geeignet.
Die Figur 17 a zeigt den Rohrquerschnitt (30) oder auch als Einzelrohr (10).
Die Figur 17 b zeigt den Längsschnitt durch das Rohr(30/10).
Der Düsenkörper (2) hat 7 fächerförmig angeordnete Bohrungen (4) die in den Materialfluß (17) mit dem Einspritzstrahl (18) Dosieren und Mischen.

In der Abfolge ergeben sich die in Fließrichtung gespritzen verhergehenden Einspritzstrahlen (36) respektive (37).

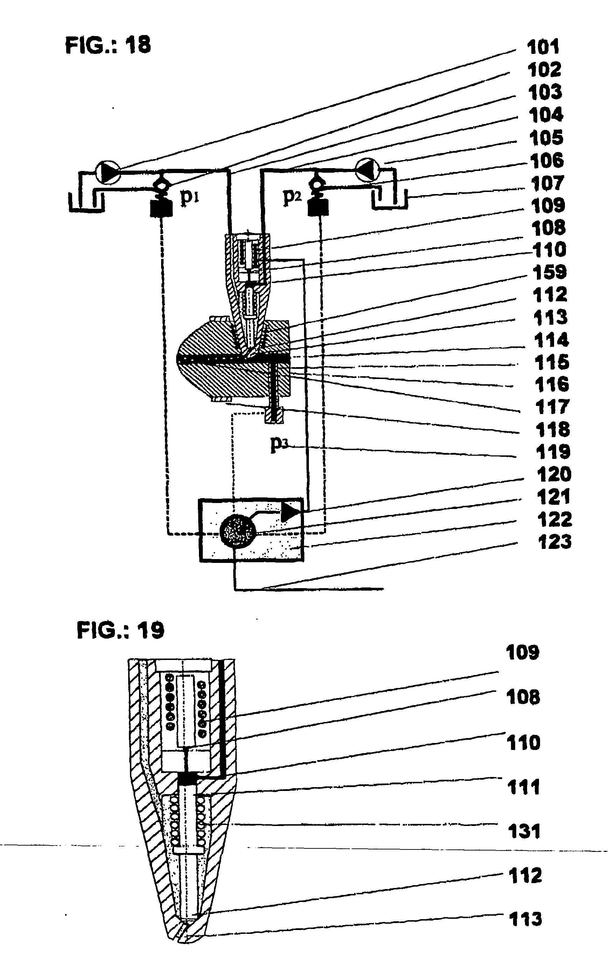

In Figur 18 ist die gesamte Vorrichtung für einen Injektor einfacher Bauart (1973) dargestellt. Durch die Anwendung von Pumpen (101) und (105) ist dieses Hydraulikschema für Stetigbetrieb geeignet. Das Einspritzmedium (103) ist vom Steuermedium (104) getrennt ausgeführt. Der Druck der Kreisläufe wird mittels elektrisch betätigtem Druckreduzierventil (102, 106) eingestellt, Das Ventil (112) wird mittels elektro-hydraulischer Betätigung bewegt. Diese besteht aus dem Solenoid (109) dem Kugelventil (108) und dem Hochdruckzylinder für die hydraulische Betätigung (110). Die Steuerung (122) des elektro-hydraulischen Betätigung erfolgt mittels lnformationsvererbeitung (120) über Einspritzzyklus/Extrusionsdaten (123), den Drucksensoren der Schmelze (115), des Einspritzmediums (102) des Steuermediums (106). Mittels frei gestaltbarem Wellenform Generator (120) wird das Öffnen und Schließen des Ventils (112) optimiert. Die Einbringung der Gasbildenden Substanz (117) in den Schmelzestrom (114) erfolgt im Zwischenstück (116) zwischen Extruder/Spritze (180), über die in den (114) ragende Düse (113). Zur temperierten Einführung der gasbildenden Substanz ist eine Heizung (159) im Bereich der Düse (113) angebracht.

Figur 19 stellt einen Injektor entsprechend dem Stand der Technik aus 1973 dar. Diese besteht aus einer Sacklochdüse (113) um den Düseninhalt im Brennraum klein zu halten. Der Ventilsitz (112) verschließt die Düse vom ständig Druckführenden Bereich. Die Anpreßfeder (131) ergänzt die Kraftdifferenz aus Düsennadel (112) und hydraulischer Anpressung (110). Die Öffnung erfolgt durch betätigen des Selenoids (109), der die Ventilkugel (108) frei gibt und das Steuermedium aus dem Hochdruckraum (110) strömen laßt.

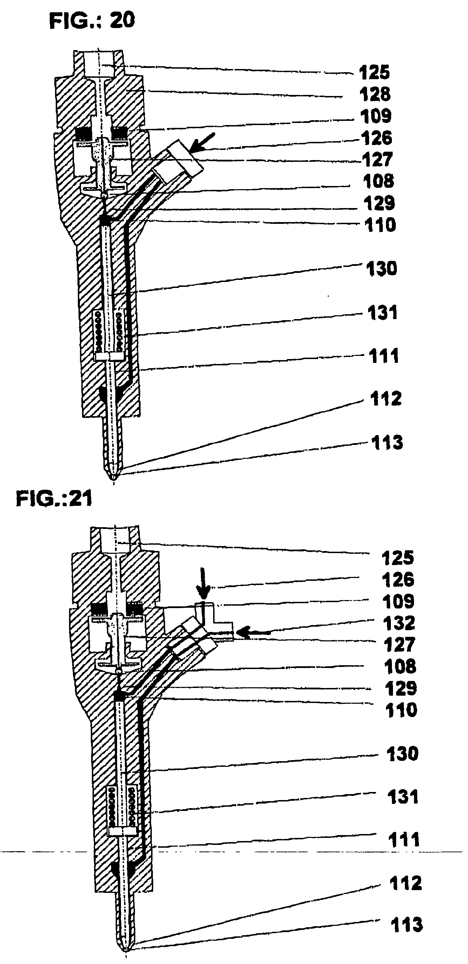

Figur 20 stellt die Injektoren entsprechend dem Stand der Technik dar. Im Wesentlichen die Merkmale die bereits 1973 erkennbar sind, wobei die Ausführung der elektro-hydraulischen Betätigung mittels Drosseln (129) Zuganker (127) und Doppelkammer erweitert wurde, Handelsübliche Injektoren weisen bei der Zuführung (126) zwei Bohrungen für die Zuleitung zum Steuerkreislauf und zur Injektionsdüse auf.

Figur 21 gibt einen einfachen Umbau eines handelsüblichen "common rail injectors" zur Ansicht. Die bereits vorhandenen zwei Bohrungen werden mittels Sondernippel getrennt angespeist.

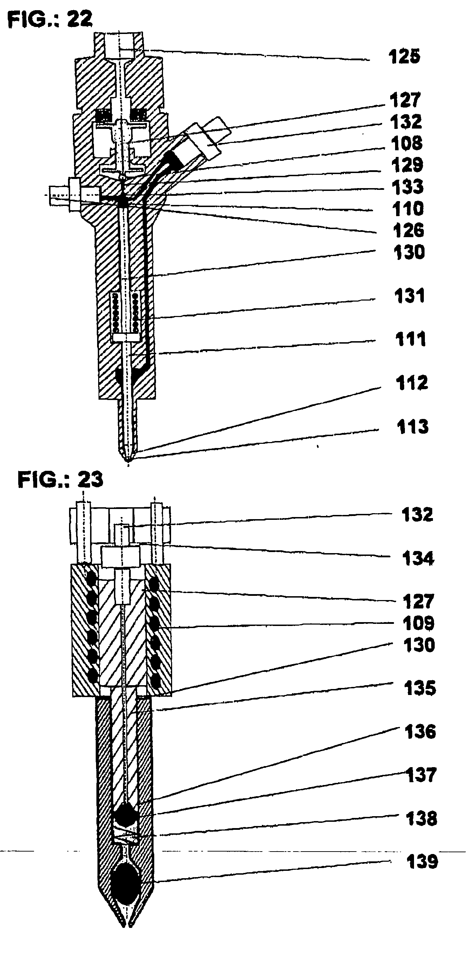

Figur 22 stellt den Umbau eines handelsüblichen "common rail injectors" mit einer zweiten Bohrung dar. Die Steuermediums Bohrung in der ursprünglichen Zuführung (132) wird verschlossen. Ein zusätzlicher Zugang zur Hochdruckkammer (133) wird gebohrt und ein zweiter Anschlußnippel (126) für das Steuermedium gefertigt.
Figur 23 stellt eine Pumpen-Düsenanordnung dar, wobei die Hochdruckkammer im Bereich der Düse anordnet ist. Das Einspritzmedium wird in einer Bohrung im Stößel (135) zugeleitet und die Pumpenwirkung mittels eines Einlaß- (137) und eines Auslaßventiles (139) erzielt, Das Eindringen der Schmelze wird durch die Kugel (139) verhindert. Die Rückholfeder (138) drückt die Kugel (137) in den Sitz.
Der Stößel (135) wird mittels Magnetschwingers (127) hin- und herbewegt. Mittels Endanschlag (134) wird die Tröpfchengröße bestimmt. Die Leckölleitung (140) entorgt das Ausdringende Einspritzmedium.

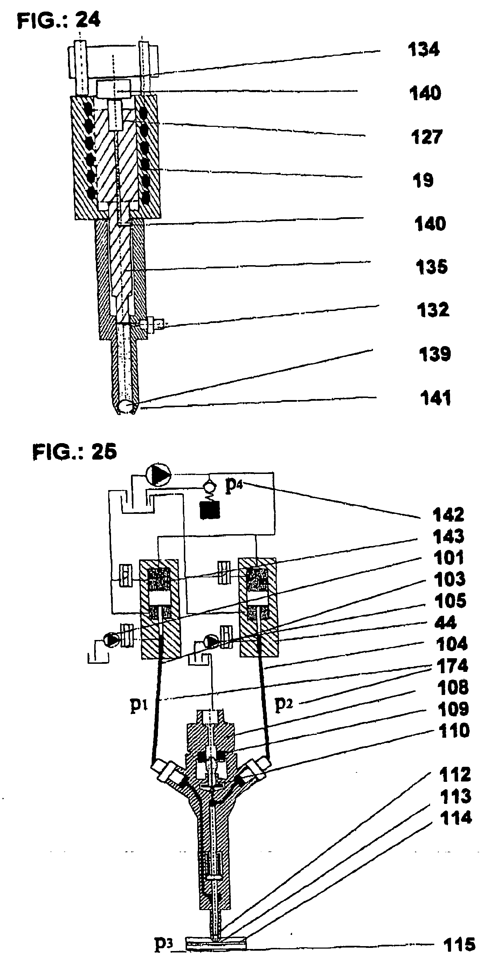

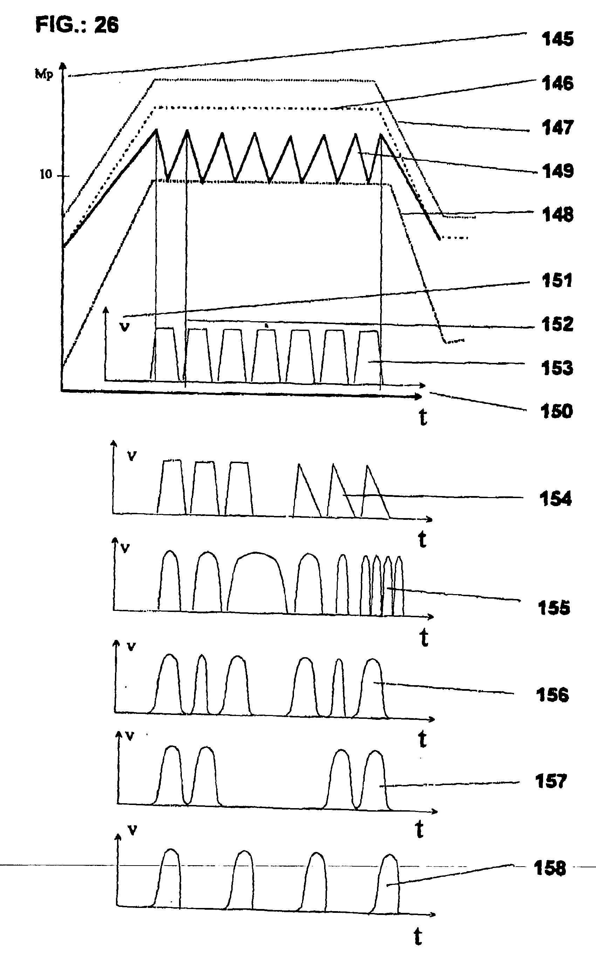

Figur 24 stellt eine Airless Sprühpumpe dar, die sich vom Stand der Technik durch die in der Düse befindlichenVentilkugel (139) unterscheidet. Vorteilhaft wird des Düsenvolumen sehr klein gehalten, was mittels Einbördelung (141) des Kugelsitzes erfolgt. (134, 135, 140) wie in Figur 23.
Figur 25 stellt die Hydraulik für einen Stückbetrieb wie zum Beispiel bei Spritzgießmaschinen und Druckgußanlagen dar. Die Betätigung des Injektors erfolgt im Zweikreissystem. Die Druckerhöhung erfolgt mittels des vorhandenen Hydrauliksystems (142). Da es im Stückbetrieb lange Phasen ohne Nutzung der Einspritzung gibt ist hier ein diskontinuierlicher Vorgang aufgezeigt. Die Druckerhöhungszylinder für Einspritzmedium (143) und für Steuermedium (144) werden über das Druckregulierventil (142)während der Einspritzphase mit dem Druck p₄ beaufschlagt. Anschließend werden die Hochdruckseitigen Räume mit den Pumpen (101) für Einspritzmedium und (105) für das Steuermedium gefüllt.
Figur 26 zeigt die Merkmale des Druckverlaufes (x-Achse in Mpa (145) über der Zeit t (150)), für das hier vorgeschlagene Verfahren.
Der Schmelzdruck p₃ wird mittels Kurve (148), der Einspritzdruck p₁ mittels Kurve (146), der Steurmediumsdruck p₂ mittels Kurve (147) aufgezeigt. Die Erregerspannung (153) betätigt die elektro-hydraulische Ventilsteuerung mit dem Druck der in Kurve (149) dargestellt ist, Verschiedene Wellenformen für die Erregerspünnung wurde mit (154) Dreiecksform, (155) Halbe Sinusschwingung in unterschiedlicher Frequenz und Phase, (156) Glockenform, (157) Glockenform in unterschiedlicher Phase und (158) unsymmetrische Formen, die mittels frei gestaltbarem Wellenform Generator erzeugt werden,

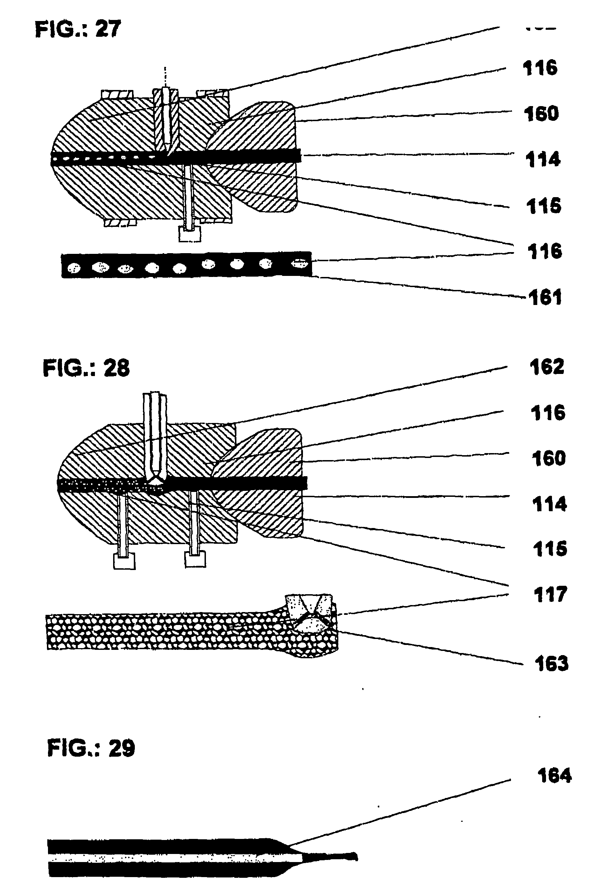

Figur 27, 28 und 29 stellt den Schmelzkanal dar.
Figur 27 zeigt einen parallelen Schmelzkanal (114) mit im Gleichstrom gerichteter Düse im Zwischenstück (116) das zwischen Werkzeug (162) und Spritze (160) liegt.
Diese Anordnung ist für die Dotierung von Tröpfchen (161) im Schmelzestrom (114) geeignet.
Figur 28 zeigt eine Sterndüse (163) im Gleich und Gegenstrom für gute Durchmischung der gasbildenden Substanz mit der Schmelze in einem ausgebauchten Schmelzkanal (114), der zusätzlich durch Geschwinigkeitsveränderung der Schmelze für weitere Durchmischung sorgt.
Figur 29 zeigt eine Strangeinbringung (164) in den Düsenkanal. Dies ist für die Einbringung von achsialen Hohlräumen bei Extruder Profilen geeignet.

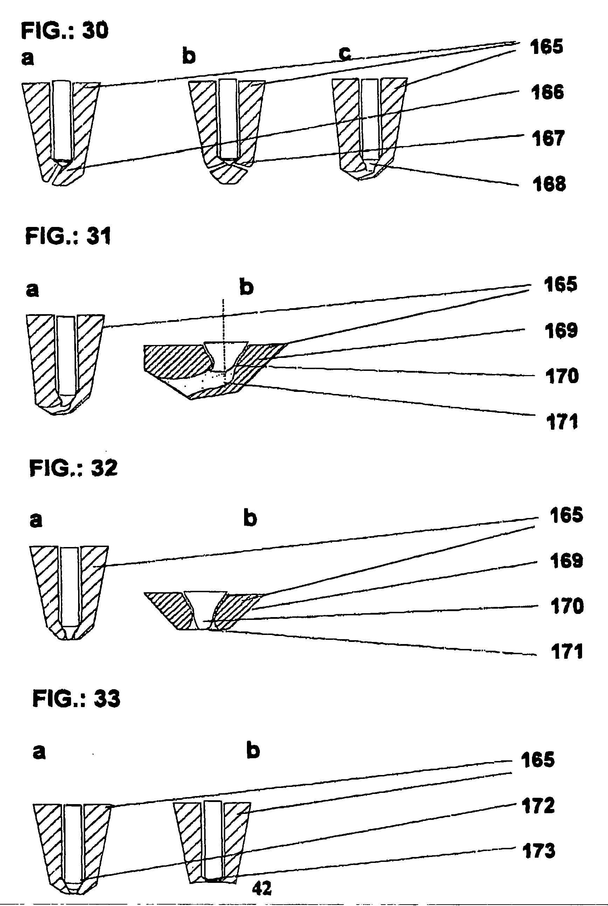

Figur 30,31 und 32 stellt die Düsen dar, wobei
Figur 30 den Stand der Technik zeichnet.
30a zeigt eine Sitzlochdüse
30b zeigt eine Sternlochdüse
30c zeigt eine Sacklochdüse
Figur 31 zeigt eine Düse die für Gleich- und Gegenstrom Einbringung geeignet ist,
Für die Einbringung der Schmelze als Tropfen wird erfindungsgemäß die Düse nach hydrodynamischen Gesichtspunkten gestaltet. Um eine Zerstäubung zu vermeiden sind strakende Übergänge des Ventilkegels (170) und des Düsen Profiles (171) beabsichtigt.
Figur 32 zeigt eine Düse die quer zur Strömungsrichtung einbringt und für Tröpfchen Dotierung sich eignet.
Figur 33 zeigt eine Düsenform mit Zerstäubung Kegelsitz (172) und Flachsitz (173) die quer zur Strömungsrichtung angeordnet sind.

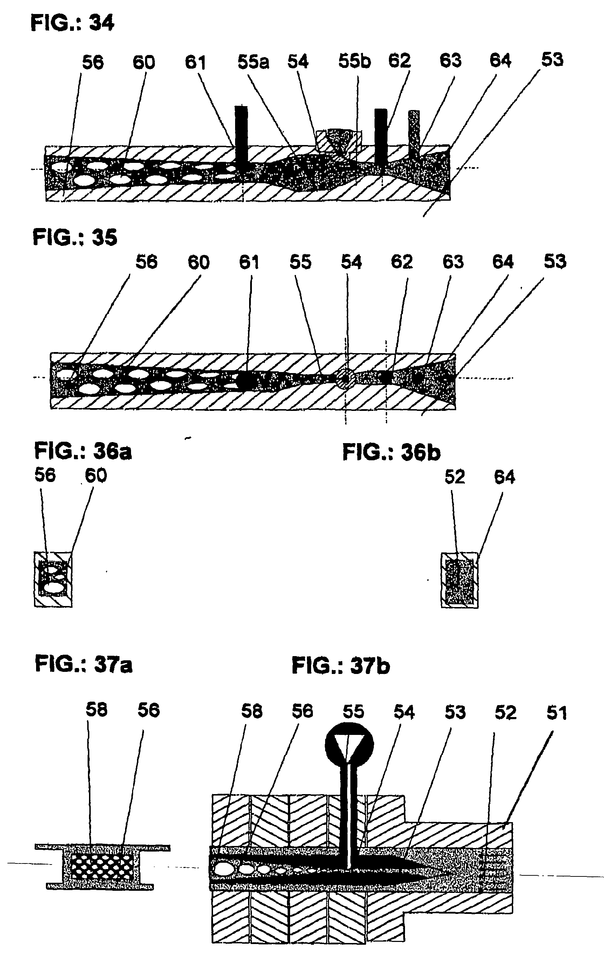

Die Figur 34 zeigt das Detail der Vorrichtung zur Compoundierung eines Schmelzestranges. Dies wird bei Ausführungen von Domen (53) in Profilwerkzeugen (51) oder in Reihenausführung für Werkzeugen zur Herstellung von Platten ausgeführt. Die Ansicht zeigt die gleiche Schnittrichtung wie die Figur 16a und b

Die Fließrichtung ist ebenfalls von links nach rechts dargestellt.
Der Dom (53) ist auf der Einlaufseite als Trichter (64) ausgebildet. In der Einlaufseite ist ein Drucksensor (63) dargestellt, der die Aufgabe hat den Mengenregler (62) und die Dosierpumpensteuerung mit Daten zu versorgen. Die Einbringung ist mit (55b) im Gegenstrom und mit (55a) im Gleichstromprinzip dargestellt. Das Gegenstromprinzip (55b) hat den gesicherten Vorteil, daß die Einbringung in abgeschlossenen nicht verbundenen Dotierungen erfolgen kann. Die Einbringung (4) kann wahlweise auch pulsierend erfolgen. Mit (61) ist beispielhaft eine Schikane zur Umlenkung der Schmelze dargestellt. Die Geschwindigkeitsänderung im Schmelzekanal führt zu Scherwirkung und demzufolge zu zusätzlicher Durchmischung. Mit (60) ist die Expansionszone gezeichnet.

Die Figur 35 zeigt die Vorrichtung aus Figur 34 in einem senkrecht zur Achse liegenden Schnittebene. Die Bezugszeichen haben dieselbe Bedeutung. Bemerkenswert ist die Verengung des Schmelzekanales in diesem Schnitt.

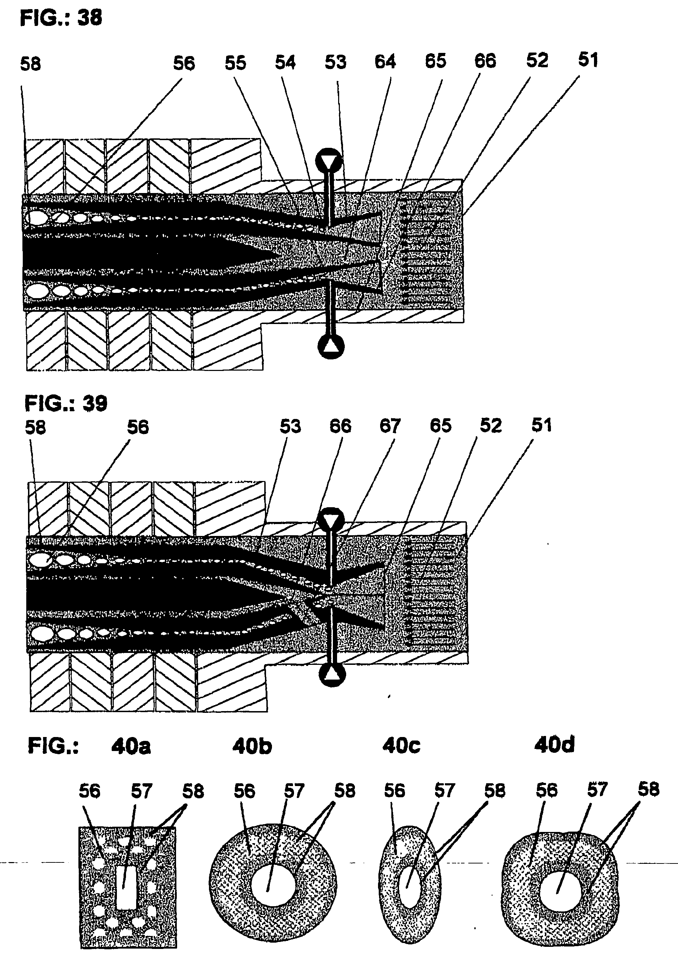

In den Figuren 38a und b ist der Querschnitt an der Austrittsseite der Vorrichtung aus Figur 34 und 35 dargestellt Mit Figur 36b ist der Eintritt im Querschnitt gezeichnet.
Die Figuren 37a and 37b zeigen die Ausführung wie in Figur 33a und 33b jedoch für einfache geschäumte Profile, wie zum Beispiel Verkleidungsprofile mit isolationswirkung, Hausverkleidung und Rohre.
Die Bezugszeichen haben dieselbe Bedeutung wie in Figur 33.
Figur 38 zeigt eine Variante der Schmelzkanalgesteltung bis vor zur Verteilerkammer des Werkzeuges. Es sind zwei Einlauftrichter (64), (65) aufgezeigt, die einen mittleren Einlaufbereich (66) der Schmelze zulassen.

Figur 39 zeigt eine Variante der Schmelzkanalfürhung mit einer zentralen Einlaufstelle des Nebenkanals und einer konzentrischen (doppelten) Einbringung der Zuschlagstoffe und einer anschließenden Aufteilung der Schmelze an die verbestimmten Stellen des Profiles. Eine Schmelzführung mit Durchtritt (67) in die Mitte des umströmten Bereichs ist ebenso angedeudet.

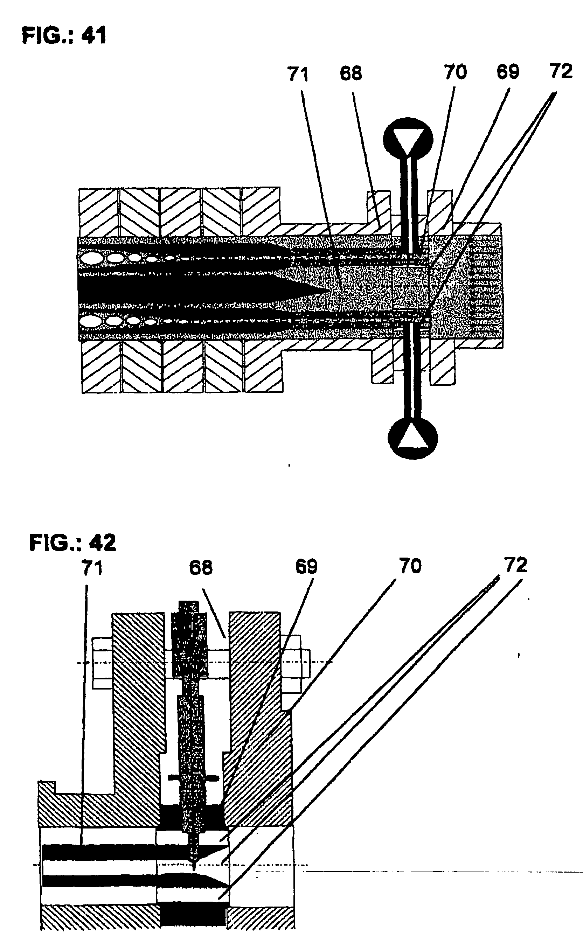

Figur 40 a zeigt ein Rechteckprofil, 40b Kreis. Rohrprofil, 40c elliptisches Profil, 40d rechteck-gerundetes Profil. Dies zeigt mögliche Profilformen mit mehreren Komponenten beispielhaft, die mit den Vorrichtung aus Figur 33, 38, 39 und 41 hergestellt werden insbesonders jedoch einfache Rohrformen.

Figur 41 stellt eine Vorrichtung dar, die als Zusatzeinrichtung in bestehende Extrusionslinien eingebaut werden kann und die Werkzeuge zu Mehrfach Komponenten Betrieb nachrüsten kann.
Mit (68) ist der Flansch des Werkzeuges, mit (69) der Flansch des Extruders dargestellt.
Mit (70) ist das Zwischenstück der Nachrüstung und (71) die Schmelzkanal Durchtritte markiert.
Figur 42 stellt die Vorrichtung die in Fig. 41 dargestellt ist in Form einer Konstruktionszeichnung der.
Die Vorrichtung selbst wird mittels der Scheibe (70) zwischen die Flansche (68) und (69) geschraubt. Diese Scheibe enthält die Vorrichtungen zur Einbringung der Zuschlagstoffe aber auch die Blenden (72) zur Abzweigung der Schmelzen. Als Rohr (72) mit Andockfläche zu den hohlen Dornen ist die Schmelzekanalführung bis zum Dom angedeutet.

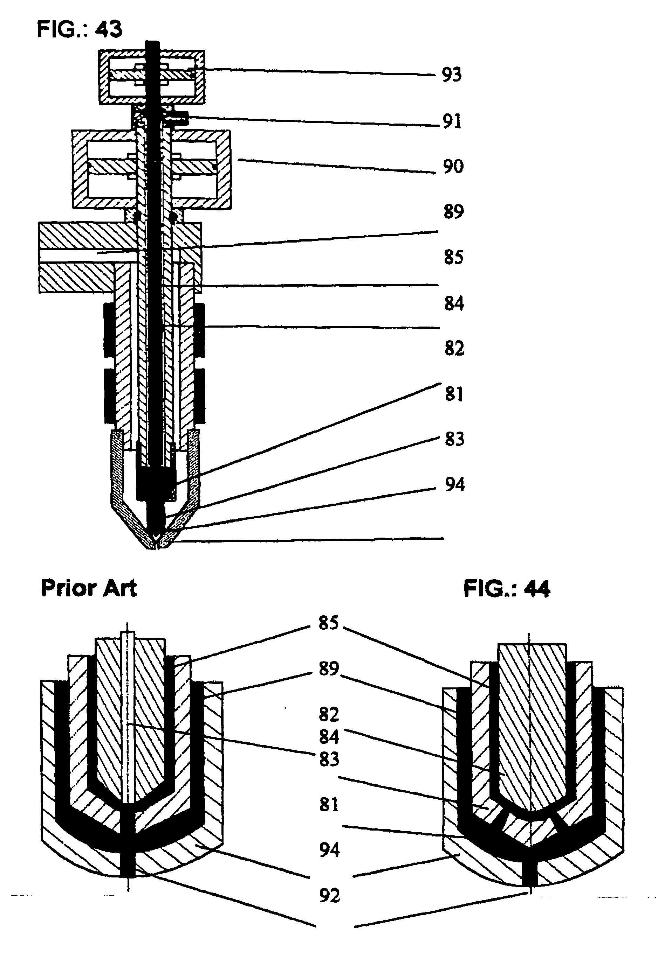

In den Figuren 43 bis 46 sind Heißkanaldüsen für Spritzgießmaschinen dargestellt.
Figur 44 zeigt die vorliegende Vorrichtung im Vergleich zum Stand der Technik.

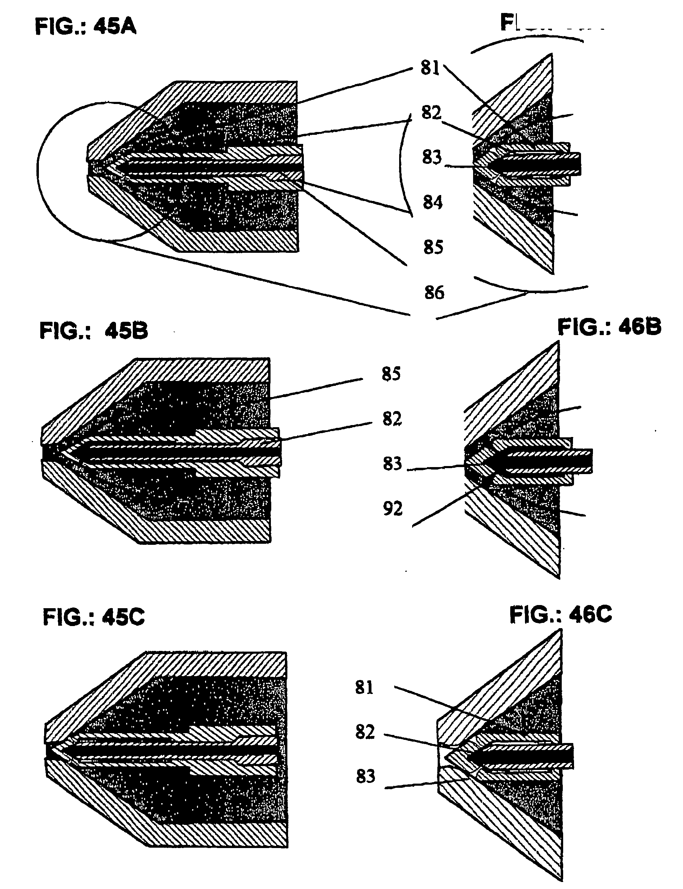

Figur 45 bis 45C zeigt die Betätigung der Nadelspitze.

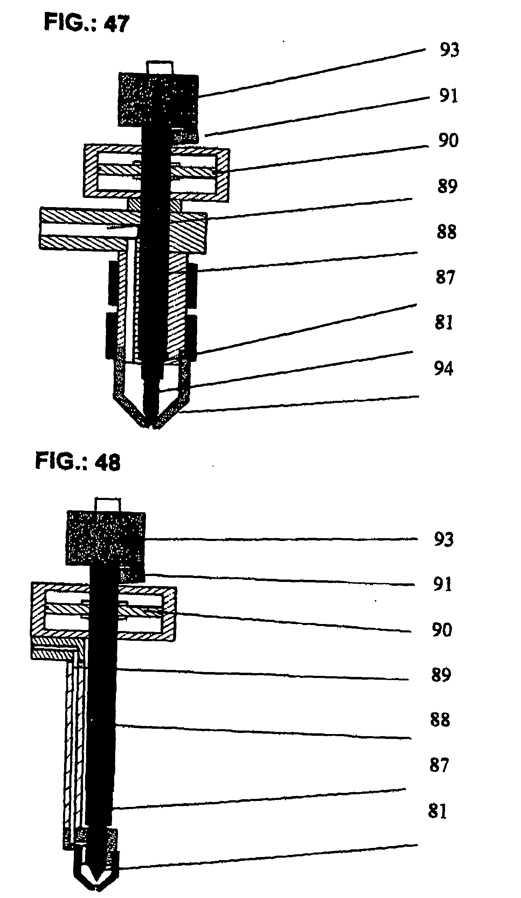

Figur 47 zeigt eine Ausführung mit einem schnell pulsierenden Servo getriebener Nadelbetätigung (CDI Injektor)
Figur 48 zeigt die Integration eines CDI Injektors in die Heißkanaldüse

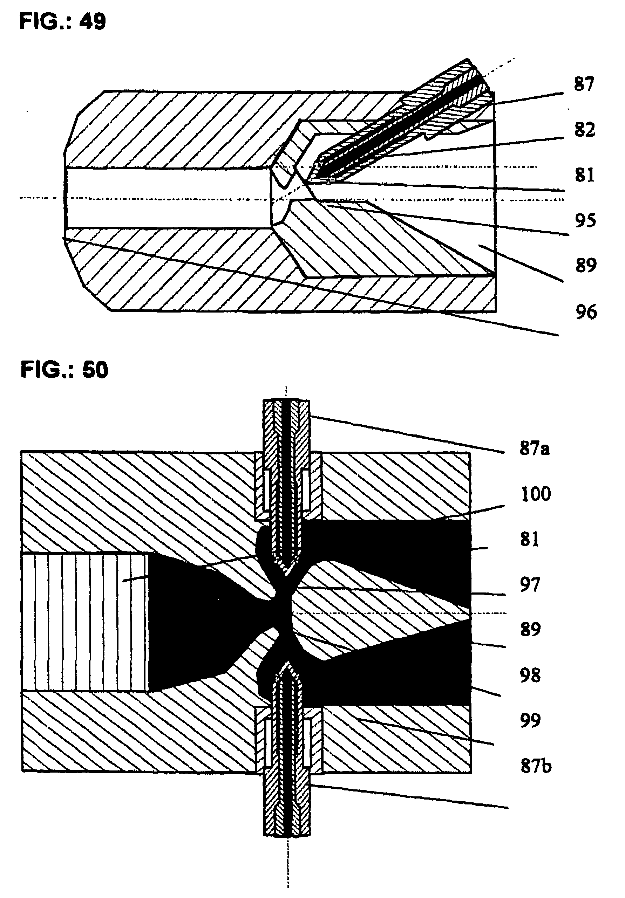

Figur 49 zeigt die Anordnung des Misch- und Dosierkopfes zum Beispiel im Schmelzekanal der Plastifiziereinheit einer Spritzgleßmaschine oder einer Extruders.
Figur 50 zeigt die Anordnung einer Zwillingseinhelt im Gegenstromverfahren geeignet für flüssig / flüsslg-Mlscher, aber auch für Extruder vor einem statischen Mischer,

Figur 43 zeigt eine Vorrichtung zum Mischen, Dosieren und Dotieren. Die Innere Düsennadel (82) wird mittels Verstellvorrichtung (93) betätigt und bildet mit dem Einsatzstück (83) eine Sacklochdüse oder eine Sitzlochdüse. Dieses Einsatzstück wiederum ist als äußere Düsennadel ausgebildet und wird mittels der Verstellvorrichtung (90) betätigt. Die Zuführung der Substanz erfolgt in einer Bohrung - (85) die wiederum mit einem Anschlußstück (91) verbunden ist. Das viskose Medium wird im Kanal (89) zugeführt und gelangt zwischen äußerer Düse (81) und dem Zuführungsstück (94,) beispielsweise ein Heißkanaldüse, eine Plastifiziereinheit oder ein Schmelzekanal in einem Extruder zum Bestimmungsort.

Prior Art; zeigt die Ausführung der inneren Düsennadel als Bolzen (84), der sowohl denn Inneren Düsensitz, wie auch den äußeren Düsensitz (94), oder beide, je nach Position ders Bolzens (84) verschließt oder öffnet. Die äußere Düsennadel wird ebenso bewegt und reguliert den Zufluß des äußeren Mediums.

In Figur 44 ist die vorliegende Vorrichtung dargestellt und weist mit dem Düseneinsatzstück (83) im dargestellten Fall die Gestalt eine Sitzlochdüse (VCO) auf. Die Öffnungen in der inneren Düse (83) werden von der Düsennadel (82) im geschlossenen Zustand abgedeckt, Die Innere Substanz wird zwischen Düsennadel (82) und Sitzlochdüse (83) zugeführt und wird in die Öffnung in das äußere viskose Medium gedrückt. Je nach Stellung der inneren Düsennadel (82) wird pulsierend, zerstäubend oder Injizierend die Substanz (85) in das äußere viskose Medium (89) eingebracht. Die kegelig geformte äußere Düsenadel (83), die zugleich Innere Düse ist, schließt die Öffnung in dem Düsensitz des Hotrunners (94) der Plastifiziereinheit (95) oder dem Schmelzekanal des Extruders (97), bzw. regelt die Öffnung nach dem gewünschten Durchsatz, sodaß eine Dotierung und Mischung der beiden Medien (92) erfolgt

In der Figur 45A ist die geöffnete Stellung für die Einbringug des äußeren Mediums dargestellt. Die äußere Düsennadel (81) ist geöffnet, die innere Düsennadel (82) ist geschlossen. Die Substanz (85) kann nicht eindringen.

In der Figur 45B ist nun auch die Innere Düsennadel (82) geöffnet und gibt die Sitzlochdüse (83) frei und die Innere Substanz (85) strömt in das äußere Medium (92)

In der Figur 45C sind sowohl die innere (82), wie auch die äußere Düsennadel (83) geschlossen dargestellt.

Die Figuren 46A , 46B. 46C korrespondieren mit den Figuren 45A, 45B, 45C nur in vergrößerter Darstellung.

Figur 47 zeigt die Kombination eines CDI Injektors (88) in einem Düseneinsatz als Sitz- oder Sacklochdüse (87), die zugleich die Funktion der Düsennadel im Nadelsitz des Schmelzebereiches übernimmt, die das Mundstück der Heißkanaldüse (94) abschließt. Der CDI Injektor wird mittels Verstellvorrichtung (93) betätigt Die innere Düsennadel wird mittlels Solenoid/hydraulik oder piezo/hydraulik Servos betätigt. Die Zuführung der Substanzerfolgt über die Verschraubung (91). Die Schmelze wird über den Kanal (89) zugeführt.

Die Figur 48 unterscheidet sich von der Figur 46 dadurch, daß der Schmelzekanal (89) bis zum Einsatzstück (87) separat geführt wird.

Figur 49 zeigt die Anordnung des Misch- und Dosierkopfes (95) in der Düse einer Plastifiziereinheit (96) einer Spritzgießmaschine. Das Einsatzstück (87) regt in den Mischkopf (95) und die äußere Düse (81) zugleich Einsatzstück (87) reguliert den Durchfluß der Schmelze (89).

Figur 50 zeigt den Dosier und Mischkopf (98) in einem Rohr, beispielsweise ein flüssig/flüssig Mischer oder einem Schmelzekanal einer Extrusionsmaschine (99).
Die Einsatzstücke (87a, 87b) ragen in die kegeligen Düsensitze des Mischers und verändern als äußere Düsennadel (81) je nach Position die Durchflußmenge der Schmelze (89).
Die Zuführung wird mittels Zuleitungsvorrichtung (97) in den Kegelsitz geleitet. Vorteilhaft erweist sich die zusätzliche Durchmischung durch den Aufeinanderprall der beiden Strömungswege nach den beiden Mischköpfen.
Wahlweise werden auch in dieser Anordnung 4 Medien miteinander vermischt. Wahlweise wird der Misch- und Dosiervorrichtung ein statischer Mischer nachgeschaltet.

## Patentansprüche

1. Verfahren zum Einbringen eines Zuschlagstoffs oder mehrerer Zuschlagstoffe in ein strömendes Medium unter Verwendung von mindestens einem Injektor, mit dem der Zuschlagstoff bzw. einer der Zuschlagstoffe bei einer reichhaltigen Anreicherung mit kinetischer Energie sowie Impuls, nämlich mit einem Druck grösser als 40 MPa pulsierend in das Medium eingespritzt und in Relation zu dessen Volumenstrom dosiert wird, wobei jeder Injektor in den Strömungsbereich hineinragend angeordnet ist und mindestens eine Düse umfasst, in der eine Düsennadel mit einer Nadelsteuerung, eine vorgegebene Pulsfrequenz und Spritzdauer bewirkend, gesteuert bewegt wird, eine Einspritzdüse mindestens eine Einspritzöffnung aufweist, deren Durchmesser einen Wert zwischen 0,08 bis 0,2 mm hat, der Zuschlagstoff in den Injektor unter einem Druck eingespeist wird, bei dem der Zuschlagstoff aus jeder Düse so tief in das strömende Medium eindringt, dass eine weitgehend homogene Durchmischung erzielbar ist, und wobei die Nadelsteuerung wahlweise mit einem der folgenden Mitteln ausgeführt wird: mittels einem elektro-hydraulischen, mit Solenoid betätigten Servoventil, mittels einem piezoelektrischen Aktuator, mittels pneumatischen Mitteln, mittels hydraulischen Mitteln, mittels einem Magnetfeld, das die Düsennadel von Aussen betätigt, oder mittels einem Linearantrieb, der die Düsennadel antreibt.

2. Verfahren nach Anspruch 1, **dadurch gekennzeichnet, dass** mindestens eine Betriebsgröße des Zuschlagstoffes oder des Mediums geregelt wird, wobei Betriebsgrößen des Zuschlagstoffes dessen Temperatur und Druck sowie die Pulsdauer und Frequenz der pulsierende Injektion sind und Betriebsgrößen des Mediums dessen Temperatur, Druck oder Massenstrom sind.

3. Verfahren nach Anspruch 1 oder 2, **dadurch gekennzeichnet, dass** der Zuschlagstoff in einem geschmolzenen, pastösen, plastischen, flüssigen, gelösten, dispergierten, emulgierten Zustand oder in Kombinationen solcher Zustände in das Medium eingebracht wird und dass das Medium in Form von Gas, Flüssigkeit, Schmelze, Paste, Lösung, Dispersion, Emulsion, fluidisiertem Schüttgut oder einer Kombination dieser Formen vorliegt.

4. Verfahren nach einem der Ansprüche 1 bis 3, **dadurch gekennzeichnet, dass** der Zuschlagstoff ein Additiv ist, beispielsweise ein Härter, Farbstoff, Gasbildner oder Weichmacher, welches Additiv in eine Kunststoffschmelze, eine Metallschmelze oder ein fluidisiertes Material genau dosiert eingebracht und mit diesem Medium vermischt wird.

5. Verfahren nach einem der Ansprüche 1 bis 4, **dadurch gekennzeichnet, dass** der Zuschlagstoff in einer Spritzgießanlage wahlweise an einer der folgenden Stellen eingespritzt wird: zwischen zwei Abschnitte einer Plastifiziereinheit, nach einer Plastifiziereinrichtung, in eine vordere Plastifizierkammer vor der Düse, nach einer Verschlußdüse, in einen Schmelzekanal, in ein Heißkanalsystem, in Teilstränge des Heißkanalsystems oder in Teile der Schmelzkanäle von Werkzeugen.

6. Verfahren nach einem der Ansprüche 1 bis 4, **dadurch gekennzeichnet, dass** der Zuschlagstoff in einer Extrusionsanlage wahlweise an einer der folgenden Stellen eingespritzt wird: zwischen zwei Abschnitte einer Plastifiziereinheit, in eine vordere Plastifizierkammer, nach einem Extruder, nach einer Zahnradpumpe, in den Schmelzekanal vor einem Werkzeug, in ein Werkzeug vor einem Verteilersystem, in den Querschnitt vor einem Austritt.

7. Verfahren nach Anspruch 6, **dadurch gekennzeichnet, daß** ein Schmelzestrom in mindestens zwei Schmelzkanälen des Werkzeugs geführt wird, dass einem Extrudat in mindestens einem abgezweigten Schmelzekanal eine Zusatzkomponente zugeleitet wird, so dass eine zweite Komponente entsteht, dass mittels geeigneter Führung des Schmelzkanals diese zweite Komponente an vorbestimmte Bereiche herangebracht wird, so dass sie im Werkzeug zu einem Strang bestehend aus mehreren Werkstoffkomponenten verschmolzen wird.

8. Verfahren nach einem der Ansprüche 1 bis 4, **dadurch gekennzeichnet, dass** der Zuschlagstoff, nämlich ein Brennstoff oder Farbstoff, in Heiz- und Brenneranlagen bzw. in Airless-Spritzanlagen pulsierend in einen Luftstrom (39) eingespritzt wird.

9. Vorrichtung zum Einbringen von mindestens einem Zuschlagstoff in ein strömendes Medium unter Anwendung des Verfahrens gemäss einem der Ansprüche 1 bis 8, wobei mit mindestens einem Injektor der Zuschlagstoff durch pulsierende Einspritzung in das Medium dosierbar ist, jeder Injektor mindestens eine Düse umfasst, in der eine Düsennadel mit einer Nadelsteuerung, eine vorgegebene Pulsfrequenz und Spritzdauer bewirkend, gesteuert bewegbar ist, der pulsierend betätigte Injektor in den Strömungsbereich hineinragend angeordnet ist und dass eine Einspritzdüse mindestens eine Einspritzöffnung aufweist, deren Durchmesser einen Wert zwischen 0,08 bis 0,2 mm hat - je nach erforderlicher Eindringtiefe des in das Medium einzubringenden Zuschlagstoffs -, wobei eine Pumpe zur Druckaufbringung grösser als 40 MPα an den Injektor angeschlossen ist und die Nadelsteuerung wahlweise mit einem der folgenden Mitteln ausgeführt ist: mittels einem elektro-hydraulischen, mit Solenoid betätigten Servoventil, mittels einem piezoelektrischen Aktuator, mittels pneumatischen Mitteln, mittels hydraulischen Mitteln, mittels einem Magnetfeld, das die Düsennadel von Aussen betätigt, oder mittels einem Linearantrieb, der die Düsennadel antreibt.

10. Vorrichtung nach Anspruch 9, **dadurch gekennzeichnet, dass** der Injektor(128) mit einer Injektionsdüse (113) so ausgeführt ist, dass die Injektionsdüse mit einem Steuerventil (112) in unmittelbarer Verbindung steht, die an mindestens eine druckgeregelte und druckführende Zuleitung, einen "Common Rail", angeschlossen ist.

11. Vorrichtung nach Anspruch 9, **dadurch gekennzeichnet, daß** der Injektor an eine Extrusionsanlage angeschlossen ist, wobei diese Anlage beispielsweise zum Formen von Profilen, beispielsweise Fensterprofilen, vorgesehen ist, und dass der Injektor (11) in einen Nebenkanal (31) eines Hauptstranges (17) hineinragt und vorzugsweise in einen Dorn (32) eingearbeitet ist, wobei dieser Nebenkanal vorzugsweise mit einer kegelförmig geformten Expansionszone (41) ausgestattet ist.

12. Vorrichtung nach Anspruch 9, **dadurch gekennzeichnet, daß** das strömende Medium eine Schmelze ist, dass ein Steuermedium eines hydraulischen Steuerkreislauf (104) von einem Einspritzmedium - dem einzutragenden Zuschlagstoff - getrennt ist, und daß der Druck (102) des Einspritzmediums und/oder des Steuermediums wahlweise mittels einem dynamischen Druckregelventil (102, 106) regelbar ist und mittels einem Steuergerät (122) in Abhängigkeit vom Druck der Schmelze (119) einstellbar ist.

13. Vorrichtung nach Anspruch 12, **dadurch gekennzeichnet, daß** eine Druckregulierung des Steuermediums (106) und des Einspritzmediums (102) mittels elektrisch betätigtem Druckregulierventil durchführbar ist und mittels einer Steuerung entsprechend einer Auswertung von Drucksensoren (115), in der Schmelze einen Druck p₃, im Steuermedium einen Druck p₂ und im Einspritzmedium einen Druck p₁, einen Druck des Steuermediums (106), über des Einspritzmediums (102) und diesen wiederum über dem der Schmelze (119) reguliert.

14. Vorrichtung nach Anspruch 13, **dadurch gekennzeichnet, daß** eine Druckregelung zur Bildung eines Sperrdruckes zwischen den Medien jeweils den Differenzdruck von Einspritzmedium zu Schmelze und die Druckdifferenz von Steuermedium zu Einspritzmedium annähernd konstant hält.

15. Vorrichtung nach einem der Ansprüche 9 bis 14, **dadurch gekennzeichnet, dass** der Injektor durch Umbau eines handelsüblichen, für einen Kraftstoff vorgesehenen Injektor hergestellt ist und der Kraftstoff in diesem sowohl als Steuermedium als auch Einspritzmedium verwendbar ist und daher gemeinsam eingespeist wird, und dass eine Schraubverbindung der Kraftstoff-Zuleitung durch einen Sonder-Nippel ersetzt ist, mit dem ein separate Anspeisung für das Steuermedium und das Einspritzmedium ausführbar ist.

16. Vorrichtung nach Anspruch 15, **dadurch gekennzeichnet, daß** im umgebauten Injektor in der Kraftstoffzuleitung eine Bohrung für das Steuermedium blind verstiftet ist, somit nur mehr die Bohrung für das Einspritzmedium am Sonder-Nippel anspeisbar ist, und dass für die Anspeisung des Steuermediums eine eigene Bohrung mit Einschraubgewinde für einen zweiten Nippel vorgesehen ist.

17. Vorrichtung nach einem der Ansprüche 9 bis 15, **dadurch gekennzeichnet, dass** die Düse strömungsgünstig geformt ist für eine Betriebsart, bei der eine tröpfchenförmige Dotierung des strömenden Mediums vorgesehen ist.

18. Vorrichtung nach einem der Ansprüche 9 bis 15, **dadurch gekennzeichnet, dass** die Düse so geformt ist, dass durch kantige Übergänge (163, 172, 173) und sternförmige (167) Düsenöffnungen eine Zerstäubungswirkung erzielbar ist.

19. Vorrichtung nach Anspruch 10, **dadurch gekennzeichnet, dass** der Zuschlagstoff als eine Zusatzkomponente in die Extrusionsanlage einzubringen ist, dass mit der Extrusionsanlage Kunststoffprofile bestehend aus mehreren Kunststoffkomponenten herstellbar sind, dass ein Schmelzestrom von mindestens einem Extruder im Werkzeug in mindestens zwei Schmelzkanälen führbar ist, dass dem Extrudat über eine Zuführung in mindestens einen abgezweigten Schmelzekanal die Zusatzkomponente zuleitbar ist, so dass eine zweite Komponente entsteht, dass mittels geeigneter Führung des abgezweigten Schmelzkanals die zweite Komponente sich an vorbestimmte Bereiche des Profils heranbringen und sich im Werkzeug zu einem Strang, bestehend aus mehreren Werkstoffkomponenten, verschmelzen lässt.

20. Vorrichtung nach Anspruch 19, **dadurch gekennzeichnet, dass** die Schmelzkanalteilung, die Zuführung der Zusatzkomponente, die Zuführungsleitung an die Werkzeugstellen in einem Zwischenstück angeordnet sind und dieses Zwischenstück als Zusatzeinrichtung zu bestehenden Werkzeugen zwischen den Flansch des Extruders und dem Flansch des bestehenden Werkzeuges befestigt ist.

21. Vorrichtung nach Anspruch 9, **dadurch gekennzeichnet, dass** der Injektor (128) eine Injektionsdüse aufweist, die einen äusseren Düsenkegel und eine äussere, hohle Düsennadel umfasst, wobei ein Hohlraum der Düsennadel in einem vorderen Bereich entweder als Sitzlochdüse oder als Sacklochdüse ausgebildet ist und eine innere Düsennadel enthält, die mit einem kegeligen Sitz formschlüssig dichtet, die Düsennadeln jeweils mit einem zugeordneten Verstellmechanismus betätigbar sind, so dass Menge und Fliessgeschwindigkeit eines aussen fliessenden Mediums dosierbar oder abriegelbar ist, wobei ein Dosieren, Dotieren und Mischen von mindestens einer viskosen Komponente mit einer viskosen Substanz durchführbar ist.

22. Vorrichtung nach Anspruch 9, **dadurch gekennzeichnet, dass** der Injektor (128) eine Injektionsdüse aufweist, die eine Heisskanaldüse für Spritzgiesswerkzeuge ist und die eine nach aussen geführte Verschlussnadel umfasst, wobei die Verschlussnadel hohl ausgebildet ist sowie an der Nadelspitze mindestens eine schräge, insbesondere rechtwinkelig zum Nadelsitzfläche liegende Einspritzbohrung aufweist und die Verschlussnadel am hinteren Ende mittels einer Hochdruckleitung an eine druckgesteuerte Pumpe angeschlossen ist, die die Verschlussnadel mit Medium versorgt.

23. Vorrichtung nach Anspruch 21 oder 22, **dadurch gekennzeichnet, dass** die Verschlussnadel hohl ausgeführt ist und eine Nadel im Inneren angeordnet ist, mit der Einspritzbohrungen verschließbar sind, wobei diese innere Nadel mittels einem Mechanismus betätigbar ist.

24. Vorrichtung nach Anspruch 21 oder 22, **dadurch gekennzeichnet, dass** die Verschlussnadel in Form eines CDI-Injektors ausgebildet ist und dieser Injektor mit einem Verstellkolben betätigbar ist.

25. Vorrichtung nach Anspruch 23, **dadurch gekennzeichnet, dass** ein Spalt zwischen der hohlen Verschlussnadel und der inneren Nadel derart ausgebildet ist, dass durch eine Schmelze eine Saugwirkung auf die Substanz im Inneren der inneren Nadel ausübbar ist.

## Claims

1. A method for the introduction of an added substance or of a plurality of added substances into a flowing medium using at least one injector with which the added substance or one of the added substances is injected in a pulsating manner into the medium with an abundant enrichment with kinetic energy and an impulse, namely with a pressure of larger than 40 MPa, and is metered in relation to the volume flow of said medium, wherein each injector is arranged projecting into the flow region and includes at least one nozzle in which a nozzle needle having a needle control effecting a predetermined pulse frequency and injection time is moved in a controlled manner, an injection nozzle has at least one injection opening whose diameter has a value between 0.08 to 0.2 mm, the added substance is fed into the injector under a pressure at which the added substance from each nozzle penetrates so far into the flowing medium that a largely homogeneous mixture is achieved, and wherein the needle control is selectively conducted with one of the following means: by means of an electro-hydraulic servo-valve actuated by a solenoid; by means of a piezoelectric actuator; by means of pneumatic means; by means of hydraulic means; by means of a magnetic field which actuates the nozzle needle from the outside; or by means of a linear drive which drives the nozzle needle.

2. A method in accordance with claim 1, **characterised in that** at least one operating parameter of the added substance or of the medium is regulated, wherein operating parameters of the added substance are its temperature and pressure as well as the pulse duration and frequency of the pulsating injection, and operating parameters of the medium are its temperature, pressure or mass flow.

3. A method in accordance with claim 1 or claim 2, **characterised in that** the added substance is introduced into the medium in a melted, pasty, plastic, liquid, dissolved, dispersed or emulsified condition or in a combination of such conditions; and **in that** the medium is present in the form of a gas, liquid, melt, paste, solution, dispersion, emulsion or fluidised bulk material or in a combination of these forms.

4. A method in accordance with any one of the claims 1 to 3, **characterised in that** the added substance is an additive, for example a hardener, a dye, a gas former or a softener, which additive is introduced into a plastic melt, a metal melt or a fluidised material precisely metered and is mixed with this medium.

5. A method in accordance with any one of the claims 1 to 4, **characterised in that** the added substance is injected selectively at one of the following positions in an injection moulding system: between two sections of a plasticising unit; after a plasticising unit; into a front plasticising chamber in front of the nozzle; after a shut-off nozzle; into a melt passage; into a hot runner system; into part strands of the hot runner system or into parts of the melt passages of tools.

6. A method in accordance with any one of the claims 1 to 4, **characterised in that** the added substance is injected selectively at one of the following positions in an extrusion system: between two sections of a plasticising unit; into a front plasticising chamber; after an extruder; after a gear pump; into the melt passage before a tool; into a tool before a distributor system; or into the cross-section in front of an outlet.

7. A method in accordance with claim 6, **characterised in that** a melt flow is guided in at least two melt passages of the tool; **in that** an added component is directed to an extrudate in at least one branched-off melt passage so that a second component is created; and **in that** this second component is brought up to predetermined regions by means of a suitable guidance of the melt passage so that it is fused in the tool to form a strand consisting of a plurality of material components.

8. A method in accordance with any one of the claims 1 to 4, **characterised in that** the added substance, namely a fuel or dye, is injected in a pulsating manner into an air flow (39) in heating and burner systems or in airless spraying systems.

9. An apparatus for the introduction of at least one added substance into a flowing medium using the method in accordance with any one of the claims 1 to 8, wherein the added substance can be metered into the medium by pulsating injection using at least one injector, each injector includes at least one nozzle in which a nozzle needle having a needle control effecting a predetermined pulse frequency and injection time is controllably movable; the injector actuated in a pulsating manner is arranged projecting into the flow region: and in that an injection nozzle has at least one injection opening whose diameter has a value between 0.08 to 0.2 mm - depending on the required penetration depth of the added substance to be introduced into the medium - wherein a pump is connected for the application of pressure larger than 40 MPa to the injector and the needle control is selectively made with one of the following means: by means of an electro-hydraulic servo-valve actuated by a solenoid; by means of a piezoelectric actuator; by means of pneumatic means; by means of hydraulic means; by means of a magnetic field which actuates the nozzle needle from the outside; or by means of a linear drive which drives the nozzle needle.

10. An apparatus in accordance with claim 9, **characterised in that** the injector (128) is made with an injection nozzle (113) such that the injection nozzle is in direct communication with a control valve (112) which is connected to at least one pressure-regulated and press-conducting feed, a "common rail".

11. An apparatus in accordance with claim 9, **characterised in that** the injector is connected to an extrusion system, wherein this system is provided, for example, for the forming of sections, for example window sections; and **in that** the injector (11) projects into a secondary passage (31) of a main strand (17) and is preferably worked into a mandrel (32), with this secondary passage preferably being equipped with a conically shaped expansion zone (41).

12. An apparatus in accordance with claim 9, **characterised in that** the flowing medium is a melt; **in that** a control medium of a hydraulic control circuit (104) is separate from an injection medium - the added substance to be introduced; and **in that** the pressure (102) of the injection medium and/or of the control medium can be regulated selectively by means of a dynamic pressure regulating valve (102, 106) and can be set by means of a control device (122) in dependence on the pressure of the melt (119).

13. An apparatus in accordance with claim 12, **characterised in that** a pressure regulation of the control medium (106) and of the injection medium (102) can be carried out by means of an electrically actuated pressure regulation valve and, by means of a control corresponding to an evaluation of pressure sensors (115), regulates a pressure p₃ in the melt; a pressure p₂ in the control medium; and a pressure p₁ in the injection medium; a pressure of the control medium (106), via the injection medium (102) and this in turn via that of the melt (119).

14. An apparatus in accordance with claim 13, **characterised in that** pressure regulation for the formation of a blocking pressure between the media in each case keeps the pressure difference of the injection medium to the melt and the pressure difference of the control medium to the injection medium approximately constant.

15. An apparatus in accordance with any one of the claims 9 to 14, **characterised in that** the injector is manufactured by conversion of a commercial injector provided for a fuel and the fuel can be used in this both as a control medium and as an injection medium and is therefore fed in together; and **in that** a screw connection of the fuel feed is replaced by a special nipple with which a separate feed for the control medium and the injection medium can be carried out.

16. An apparatus in accordance with claim 15, **characterised in that** a bore for the control medium in the fuel feed in the converted injector has been made blind by a pin so that only the bore for the injection medium can be fed at the special nipple; and **in that** a separate bore with a screw-in thread for a second nipple is provided for the feeding of the control medium.

17. An apparatus in accordance with any one of the claims 9 to 15, **characterised in that** the nozzle is shaped in a flow manner favourable for an operating mode in which a droplet-like metering of the flowing medium is provided.

18. An apparatus in accordance with any one of the claims 9 to 15, **characterised in that** the nozzle is shaped so that an atomising effect can be achieved by edged transitions (163, 172, 173) and by star-shaped (167) nozzle openings.

19. An apparatus in accordance with claim 10, **characterised in that** the added substance is to be introduced as an additional component into the extrusion system; **in that** plastic sections consisting of a plurality of plastic components can be manufactured with the extrusion system; **in that** a melt flow can be guided from at least one extruder in the tool into at least two melt passages; **in that** the additional component can be supplied to the extrudate via a feed into at least one branched-off melt passage so that a second component is produced; **in that** the second component can be brought by means of a suitable guidance of the branched-off melt passage up to predetermined regions of the section and can be fused in the tool to form a strand consisting of a plurality of material components.

20. An apparatus in accordance with claim 19, **characterised in that** the melt passage division, the supply of the added component and the supply line to the tool positions are arranged in an intermediate piece and this intermediate piece is fastened as an additional device to existing tools between the flange of the extruder and the flange of the existing tool.

21. An apparatus in accordance with claim 9, **characterised in that** the injector (128) has an injection nozzle which includes an outer nozzle cone and an outer hollow nozzle needle, wherein a hollow space of the nozzle needle is formed in a front region either as a valve cone orifice or as a pocket hole orifice and includes an inner nozzle needle which provides a shape-matched seal with a conical seat, wherein the nozzle needles can each be actuated with an associated adjustment mechanism such that the amount and flow speed of an outer flowing medium can be metered or shut off, wherein a metering, doping and mixing of at least one viscous component with a viscous substance can be carried out.

22. An apparatus in accordance with claim 9, **characterised in that** the injector (128) has an injection nozzle which is a hot runner nozzle for injection moulding tools and which includes an outwardly guided shut-off needle, wherein the shut-off needle is made hollow and has at least one sloped injection bore, in particular an injection bore disposed at right angles to the needle seat surface, at the needle tip and wherein the shut-off needle is connected by means of a high pressure line to a pressure-controlled pump which supplies the shut-off needle with medium.

23. An apparatus in accordance with claim 21 or claim 22, **characterised in that** the shut-off needle is made hollow and a needle is arranged in the interior with which injection bores can be shut off, wherein this inner needle can be actuated by means of a mechanism.

24. An apparatus in accordance with claim 21 or claim 22, **characterised in that** the shut-off needle is made in the form of a CDI injector and this injector can be actuated by an adjustment piston.

25. An apparatus in accordance with claim 23, **characterised in that** a gap is made between the hollow shut-off needle and the inner needle such that a suction effect can be exerted onto the substance in the interior of the inner needle by a melt.

## Revendications

1. Procédé pour introduire un produit d'addition ou plusieurs produits d'addition dans un fluide en circulation avec l'utilisation d'au moins un injecteur, avec lequel le produit d'addition ou l'un des produits d'addition est injecté dans le fluide de façon pulsatoire dans le cas d'un enrichissement riche avec de l'énergie cinétique et de l'impulsion, c'est-à-dire avec une pression supérieure à 40 MPa et est dosé par rapport au flux volumique de ce fluide, chaque injecteur étant disposé de façon à dépasser à l'intérieur de la zone d'écoulement et comprenant au moins une buse, dans laquelle une aiguille de buse est déplacée de façon contrôlée avec une commande d'aiguille, entraînant une fréquence d'impulsion et une durée de pulvérisation prédéfinies, une buse d'injection présentant au moins une ouverture d'injection, dont le diamètre est compris entre 0,08 et 0,2 mm, le produit d'addition étant injecté dans l'injecteur sous une pression à laquelle le produit d'addition provenant de chaque buse pénètre dans le fluide en circulation si profondément qu'on peut obtenir un mélange largement homogène, et la commande d'aiguille étant exécutée au choix avec l'un des moyens suivants: au moyen d'une servo-soupape électrohydraulique, actionnée par solénoïde, au moyen d'un actionneur piézo-électrique, à l'aide de moyens pneumatiques, à l'aide de moyens hydrauliques, au moyen d'un champ magnétique, qui actionne l'aiguille de buse par l'extérieur, ou au moyen d'un entraînement linéaire qui entraîne l'aiguille de buse.

2. Procédé selon la revendication 1, **caractérisé en ce qu'**au moins une grandeur de service du produit d'addition ou du fluide est réglée, des grandeurs de service du produit d'addition étant sa température et sa pression ainsi que la durée d'impulsion de la fréquence de l'injection pulsatoire et les grandeurs de service du fluide étant sa température, sa pression ou son flux massique.

3. Procédé selon la revendication 1 ou 2, **caractérisé en ce que** le produit d'addition est introduit dans le fluide dans un état fondu, pâteux, plastique, liquide, dissous, dispersé, émulsionné ou dans des combinaisons de tels états et **en ce que** le fluide se présente sous la forme de gaz, de liquide, de masse fondue, de pâte, de solution, de dispersion, d'émulsion, de produit en vrac fluidifié ou dans une combinaison de ces formes.

4. Procédé selon l'une quelconque des revendications 1 à 3, **caractérisé en ce que** le produit d'addition est un additif, par exemple un durcisseur, un colorant, un formateur de gaz ou un plastifiant, lequel additif est introduit de façon dosée avec précision dans une masse fondue de plastique, une masse fondue de métal ou un matériau fluidifié et est mélangé avec ce fluide.

5. Procédé selon l'une quelconque des revendications 1 à 4, **caractérisé en ce que** le produit d'addition est injecté dans une installation de moulage par injection au choix sur l'un des emplacements suivants: entre deux parties d'une unité de plastification, après un dispositif de plastification, dans une chambre de plastification avant la buse, après une buse de fermeture, dans un canal de coulée, dans un système de canal chaud, dans des branches partielles du système de canal chaud ou dans des parties des canaux de coulée d'outils.

6. Procédé selon l'une quelconque des revendications 1 à 4, **caractérisé en ce que** le produit d'addition est injecté dans une installation d'extrusion au choix sur l'un des emplacements suivants: entre deux parties d'une unité de plastification, dans une chambre de plastification avant, après une extrudeuse, après une pompe à engrenages, dans le canal de coulée avant un outil, dans un outil avant un système distributeur, dans la section avant d'une sortie.

7. Procédé selon la revendication 6, **caractérisé en ce qu'**un flux de masse fondue est guidé dans au moins deux canaux de masse fondue de l'outil, **en ce que** un composant supplémentaire est amené à un produit d'extrusion dans au moins un canal de coulée en dérivation, de sorte qu'il se forme un second composant, **en ce que** ce second composant est amené à proximité de zones prédéfinies au moyen d'un guidage approprié du canal de coulée, de sorte qu'il est fondu dans l'outil pour former une branche comprenant plusieurs composants de matériau.

8. Procédé selon l'une quelconque des revendications 1 à 4, **caractérisé en ce que** le produit d'addition, c'est-à-dire un combustible ou un colorant, est injecté par injection pulsatoire dans un flux d'air (39) dans des installations de chauffage ou de brûleur ou dans des installations de pulvérisation sans air.

9. Dispositif d'introduction d'au moins un produit d'addition dans un fluide en circulation avec l'application du procédé selon l'une quelconque des revendications 1 à 8, le produit d'addition pouvant être dosé par injection pulsatoire dans le fluide avec au moins un injecteur, chaque injecteur comprenant au moins une buse dans laquelle une aiguille de buse peut être déplacée de façon contrôlée avec une commande d'aiguille, entraînant une fréquence d'impulsion et une durée de pulvérisation prédéfinies, l'injecteur actionné de façon pulsatoire étant disposé en dépassant dans la zone d'écoulement et une buse d'injection présentant au moins une ouverture d'injection, dont le diamètre est compris entre 0,08 mm et 0,02 mm - selon la profondeur de pénétration nécessaire de l'agrégat à introduire dans le fluide -, une pompe étant raccordée à l'injecteur par l'application de pression supérieure à 40 MPα, et la commande d'aiguille étant réalisée en option avec les moyens suivants: au moyen d'une servo-soupape électrohydraulique, actionnée avec solénoïde, au moyen d'un actionneur piézo-électrique, avec des moyens pneumatiques, avec des moyens hydrauliques, au moyen d'un champ magnétique, qui actionne l'aiguille de buse par l'extérieur, ou au moyen d'un entraînement linéaire qui entraîne l'aiguille de buse.

10. Dispositif selon la revendication 9, **caractérisé en ce que** l'injecteur (128) est réalisé avec une buse d'injection (113) de telle sorte que la buse d'injection est en liaison directe avec une vanne de commande (112) qui est raccordée à au moins une arrivée, réglée en pression et guidant la pression, un "Common Rail".

11. Dispositif selon la revendication 9, **caractérisé en ce que** l'injecteur est raccordé à une installation d'extrusion, cette installation étant prévue par exemple pour le formage de profilés, par exemple de profilés de fenêtre, et **en ce que** l'injecteur (11) dépasse dans un canal secondaire (31) d'une branche principale (17) et est intégré de préférence dans un mandrin (32), ce canal secondaire étant conçu de préférence avec une zone d'expansion (41) formée de façon conique.

12. Dispositif selon la revendication 9, **caractérisé en ce que** le fluide en circulation est une masse fondue, **en ce que** un fluide de commande d' un circuit de commande (104) hydraulique est séparé d'un fluide d'injection - l'agrégat à charger, et **en ce que** la pression (102) du fluide d'injection et/ou du fluide de commande peut être réglé au choix au moyen d'une vanne de réglage de pression (102, 106) dynamique et peut être réglé au moyen d'un appareil de commande (122) en fonction de la pression de la masse fondue (119).

13. Dispositif selon la revendication 12, **caractérisé en ce qu'**un réglage de pression du fluide de commande (106) et du fluide d'injection (102) peut être effectuée au moyen d'une vanne de réglage de pression actionnée de façon électrique et règle au moyen d'une commande en fonction d'une analyse de capteurs de pression (115), une pression p₃ dans la masse fondue, une pression p₂ dans le fluide de commande et une pression p₁ dans le fluide d'injection, une pression du fluide de commande (106), au moyen du fluide d'injection (102) et celle-ci à nouveau au moyen au-dessus de celle de la masse fondue (119).

14. Dispositif selon la revendication 13, **caractérisé en ce que**, pour former une pression de blocage entre les fluides, un réglage de pression maintient approximativement constante à chaque fois la pression différentielle du fluide d'injection par rapport à la masse fondue et la différence de pression du fluide de commande par rapport au fluide d'injection.

15. Dispositif selon l'une quelconque des revendications 9 à 14, **caractérisé en ce que** l'injecteur est fabriqué par la modification d'un injecteur classique prévu pour un carburant et le carburant peut être utilisé dans cet injecteur aussi bien comme fluide de commande que comme fluide d'injection et est donc injecté en commun, et **en ce qu'**un assemblage vissé de la conduite d'arrivée est remplacé par un nipple spécial avec lequel on peut effectuer une alimentation séparée pour le fluide de commande et le fluide d'injection.

16. Dispositif selon la revendication 15, **caractérisé en ce qu'**un alésage pour le fluide de commande est doté d'une goupille borgne dans l'injecteur modifié dans la conduite d'alimentation d'arrivée de carburant, et **en ce que** de ce fait l'alésage pour le fluide d'injection dans le nipple spécial ne peut plus être alimenté et **en ce que** un alésage spécial avec filetage vissé est prévu pour un second nipple pour l'alimentation en fluide de commande.

17. Dispositif selon l'une quelconque des revendications 9 à 15, **caractérisé en ce que** la buse est formée de façon favorable pour l'écoulement pour un mode de service dans lequel il est prévu un dosage en forme de gouttelette du fluide circulant.

18. Dispositif selon l'une quelconque des revendications 9 à 15, **caractérisé en ce que** la buse est formée de telle sorte qu'un effet de pulvérisation peut être obtenu par des passages anguleux (163, 172, 173) et des ouvertures de buse en forme d'étoile (167).

19. Dispositif selon la revendication 10, **caractérisé en ce que** le produit d'addition peut être introduit sous la forme d'un composant supplémentaire dans une installation d'extrusion, **en ce que** des profilés de plastique à base de plusieurs composants plastique peuvent être fabriqués avec l'installation d'extrusion, **en ce qu'**un flux de masse fondue provenant d'au moins une extrudeuse peut être guidé dans l'outil dans au moins deux canaux de fusion, **en ce que** le composant supplémentaire peut être amené au produit d'extrusion au moyen d'une arrivée dans au moins un canal de fusion en dérivation, de sorte qu'il se forme un second composant, **en ce que** le second composant peut être rapproché de zones prédéfinies du profilé au moyen d'un guidage approprié du canal de coulée en dérivation et peut être fondu dans l'outil pour former une branche à base de plusieurs composants de matériau.

20. Dispositif selon la revendication 19, **caractérisé en ce que** la division du canal de coulée, l'arrivée du composant supplémentaire, la conduite d'arrivée aux points d'outil sont disposées dans une pièce intermédiaire et cette pièce intermédiaire en tant que dispositif supplémentaire pour les outils existants est fixée entre la bride de l'extrudeuse et la bride de l'outil existant.

21. Dispositif selon la revendication 9, **caractérisé en ce que** l'injecteur (128) présente une buse d'injection, qui comprend un cône de buse extérieur et une aiguille de buse creuse extérieure, une cavité de l'aiguille de buse étant conçue dans une zone avant comme injecteur à trou de siège ou comme injecteur à trou borgne et contenant une aiguille de buse intérieure, qui est rendue étanche par complémentarité de forme avec un siège conique, les aiguilles de buse peuvent être actionnées chacune avec un mécanisme de réglage attribué, de sorte que la quantité et la vitesse d'écoulement d'un fluide circulant à l'extérieur peuvent être dosées et verrouillées, un dosage et un mélange d'au moins un composant visqueux avec une substance visqueuse pouvant être effectués.

22. Dispositif selon la revendication 9, **caractérisé en ce que** l'injecteur (128) présente une buse d'injection qui comprend une buse de canal chaud pour des outils de moulage par injection et qui comprend une aiguille de fermeture guidée vers l'extérieur, l'aiguille de fermeture étant conçue creuse et présentant sur la pointe de l'aiguille au moins un alésage d'injection incliné, disposé en particulier à angle droit par rapport à la surface de l'aiguille du siège de l'aiguille et l'aiguille de fermeture étant raccordée sur l'extrémité arrière au moyen d'une conduite à haute pression à une pompe commandée par pression, qui alimente l'aiguille de fermeture en fluide.

23. Dispositif selon la revendication 21 ou 22, **caractérisé en ce que** l'aiguille de fermeture est conçue creuse et une aiguille est disposée à l'intérieur, avec laquelle des alésages d'injection peuvent être fermés, cette aiguille intérieure pouvant être actionnée au moyen d'un mécanisme.

24. Dispositif selon la revendication 21 ou 22, **caractérisé en ce que** l'aiguille de fermeture est conçue sous la forme d'un injecteur CDI et cet injecteur peut être actionné avec un piston de réglage.

25. Dispositif selon la revendication 23, **caractérisé en ce qu'**une fente entre l'aiguille de fermeture creuse et l'aiguille intérieure est réalisée de telle sorte que, par une masse fondue, un effet d'aspiration peut être exercé sur la substance à l'intérieur de l'aiguille intérieure.
